Europäisches Patentamt

European Patent Office

Office européen des brevets

(19)

(11) **EP 1 123 489 B1**

(12) **FASCICULE DE BREVET EUROPEEN**

(45) Date de publication et mention
de la délivrance du brevet:
**21.07.2004 Bulletin 2004/30**

(21) Numéro de dépôt: **99949088.1**

(22) Date de dépôt: **21.10.1999**

(51) Int Cl.⁷: $G01F\ 23/26$, $G01D\ 5/24$

(86) Numéro de dépôt international:
**PCT/FR1999/002561**

(87) Numéro de publication internationale:
**WO 2000/025098 (04.05.2000 Gazette 2000/18)**

(54) **DISPOSITIF DE MESURE CAPACITIF**

KAPAZITIVER MESSWERTGEBER

CAPACITIVE MEASURING DEVICE

(84) Etats contractants désignés:
**AT BE CH CY DE DK ES FI FR GB GR IE IT LI LU
MC NL PT SE**

(30) Priorité: **23.10.1998 FR 9813329**

(43) Date de publication de la demande:
**16.08.2001 Bulletin 2001/33**

(73) Titulaires:
- **Launay, Claude**
  **94500 Champigny-sur-Marne (FR)**
- **Le Reste, Daniel**
  **77164 Ferrières-en-Brie (FR)**
- **Jordana, Pascal**
  **94510 La Queue-en-Brie (FR)**
- **Panciroli, William**
  **78660 Prunay-en-Yvelines (FR)**

(72) Inventeurs:
- **Launay, Claude**
  **94500 Champigny-sur-Marne (FR)**
- **Le Reste, Daniel**
  **77164 Ferrières-en-Brie (FR)**

- **Jordana, Pascal**
  **94510 La Queue-en-Brie (FR)**
- **Panciroli, William**
  **78660 Prunay-en-Yvelines (FR)**

(74) Mandataire: **Texier, Christian et al
Cabinet Régimbeau
20, rue de Chazelles
75847 Paris cedex 17 (FR)**

(56) Documents cités:
**DE-A- 3 413 849**    **DE-A- 4 312 432**
**DE-A- 4 434 338**    **US-A- 3 580 074**
**US-A- 4 485 673**    **US-A- 5 050 431**
**US-A- 5 406 843**

- **HUANG S M ET AL: "TOMOGRAPHIC IMAGING
  OF TWO-COMPONENT FLOW USING
  CAPACITANCE SENSORS" JOURNAL OF
  PHYSICS E. SCIENTIFIC INSTRUMENTS, vol. 22,
  no. 3, 1 mars 1989 (1989-03-01), pages 173-177,
  XP000209343**

**Description**

La présente invention concerne le domaine des capteurs.

Plus précisément, la présente invention concerne un dispositif de mesure exploitant une mesure indirecte de permittivité entre deux corps électriquement conducteurs formant respectivement une sonde de mesure et une sonde de référence.

De nombreux capteurs basés sur une mesure de permittivité ou de type capacitive ont déjà été proposés.

En particulier, on a proposé de nombreux dispositifs dans lesquels un condensateur de mesure est relié à un circuit oscillateur de sorte que la fréquence de sortie de ce circuit dépende de la capacité du condensateur de mesure et permette de déterminer un paramètre influençant la permittivité du condensateur, par exemple la hauteur du niveau d'un liquide contenu dans un réservoir dans lequel est placé le condensateur de mesure (voir par exemple les documents WO-A-98/02718, DE-A-4312432 et DE-A-4434338).

On a également proposé différents dispositifs comprenant un condensateur de mesure relié à l'entrée d'un étage intégrateur (voir par exemple DE-A-3413849 et Journal of Physics E. Scientific Instruments, vol. 22, n° 2, 1989). Cependant, ces dispositifs n'ont pas jusqu'ici donné satisfaction et n'ont pas connu pour cette raison d'exploitation industrielle.

Les documents FR-A-2205669, FR-A-2605731, FR-A-2447555, FR-A-2737297, EP-A-0378304 et EP-A-0644432 décrivent diverses variantes de dispositif procédant par mesure du temps de charge ou décharge d'un condensateur de mesure influencé par le paramètre à détecter.

D'autres dispositifs de mesure capacitive sont décrits dans les documents FR-A-2763124, FR-A-1152556 et US-A-3706980.

La présente invention a maintenant pour but de proposer de nouveaux moyens de détection adaptés pour offrir une très grande sensibilité.

Un autre but de la présente invention est de proposer des moyens de détection susceptibles d'être adaptés à de nombreuses applications.

Ces buts sont atteints dans le cadre de la présente invention grâce dispositif de mesure défini dans la revendication 1.

Selon une autre caractéristique avantageuse de la présente invention, les moyens de commande sont adaptés pour appliquer des échelons de tension sur la sonde de mesure.

Selon une autre caractéristique avantageuse de la présente invention, le dispositif comprend des moyens aptes à appliquer une tension moyenne nulle sur la sonde de mesure.

Selon une autre caractéristique avantageuse de la présente invention, l'amplificateur opérationnel précité reçoit sur une seconde entrée, opposée à celle destinée à être reliée séquentiellement à la sonde de mesure, une tension de signe opposé à la tension appliqué par les moyens d'alimentation sur la sonde de mesure.

Selon une autre caractéristique avantageuse de la présente invention, la tension appliquée sur la seconde entrée de l'amplificateur opérationnel est égale en amplitude à p.E, relation dans laquelle E désigne l'amplitude de la tension appliquée sur la sonde de mesure pendant le temps T1 et p désigne le rapport cyclique entre les deux séquences T1 et T2, soit T1 = p.T2.

D'autres caractéristiques, buts et avantages de la présente invention apparaîtront à la lecture de la description détaillée qui va suivre et en regard des dessins annexés, donnés à titre d'exemple non limitatif et sur lesquels :

- la figure 1 représente schématiquement la structure d'un dispositif de mesure conforme à un premier mode de réalisation de la présente invention,
- la figure 2 représente une variante d'un tel dispositif comprenant une sonde de mesure auxiliaire assurant une correction de permittivité,
- la figure 3 représente une autre variante conforme à un mode de réalisation préférentiel de la présente invention, comprenant des moyens aptes à appliquer une tension moyenne nulle sur la sonde de mesure,
- la figure 4 représente schématiquement une variante de dispositif conforme à la présente invention, adaptée pour déterminer le spectre du produit analysé,
- les figures 5 à 13 représentent diverses variantes de dispositifs conformes à la présente invention conçus pour la détection de niveau dans un réservoir,
- la figure 14 illustre une variante d'application à la détection de produit dans un conduit,
- la figure 15 illustre une variante d'application à la détection d'intrusion,
- la figure 16 illustre une variante d'application à la détection de la présence et/ou de la position d'un usager sur un siège,
- la figure 17 illustre une variante d'application à la détection de passage dans un portique,
- la figure 18 illustre une variante d'application à la détection d'objets transportés par une bande transporteuse,
- la figure 19 illustre une variante d'application pour la réalisation d'un clavier à touches,

- la figure 20 illustre une variante d'application pour la réalisation d'un capteur de pression et
- la figure 21 illustre une variante d'application pour la réalisation d'un détecteur de pression de pneumatique.

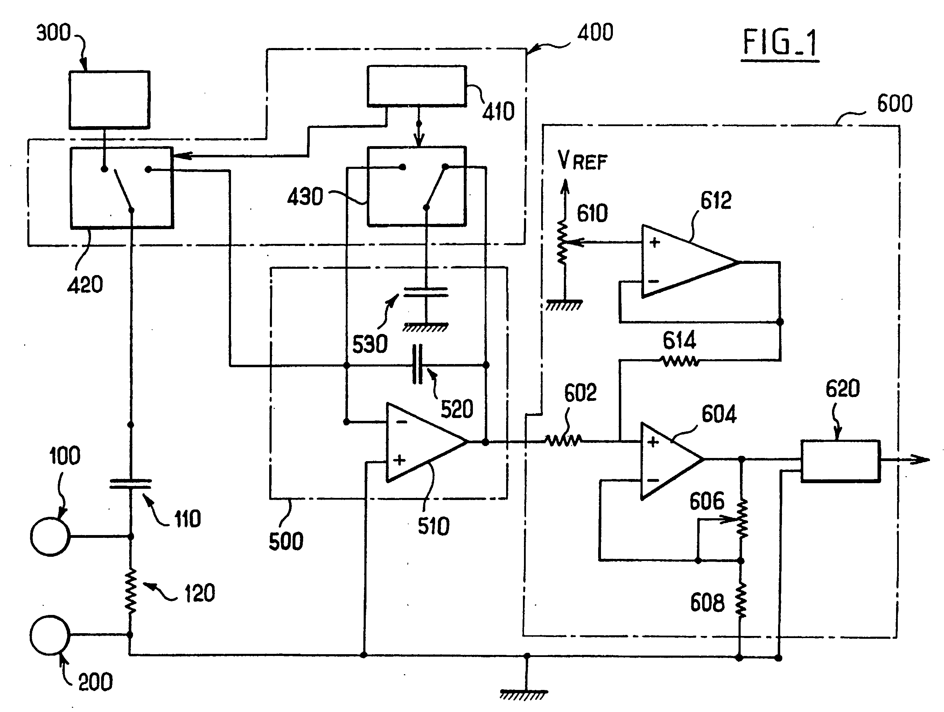

Comme on l'a indiqué précédemment, le dispositif illustré sur la figure 1 comprend essentiellement:

- une sonde de mesure 100,
- une sonde de référence 200,
- un moyen d'alimentation électrique 300,
- des moyens de commande 400 et
- un étage intégrateur 500.

La sonde de mesure 100 et la sonde de référence 200 sont formées chacune d'un corps électriquement conducteur. Ceux-ci sont espacés pour définir entre eux au moins un milieu diélectrique. On décrira par la suite plus en détail différents exemples de réalisation de telles sondes 100 et 200.

Les moyens d'alimentation 300 sont adaptés pour délivrer une tension électrique continue d'amplitude contrôlée. Cette amplitude sera référencée E.

Les moyens de commande 400 sont adaptés pour définir cycliquement, à une fréquence contrôlée f, une suite de deux séquences. Au cours d'une première séquence de durée T1 les moyens d'alimentation électrique 300 sont reliés à la sonde de mesure 100 pour appliquer un champ électrique entre la sonde de mesure 100 et la sonde de référence 200 et accumuler des charges électriques sur la sonde de mesure 100. La capacité définie entre la sonde de mesure 100 et la sonde de référence 200 est chargée pendant un temps très court défini par $\tau = \varepsilon / \gamma$, $\varepsilon$ étant la permittivité et $\gamma$ la conductivité du milieu entre les deux sondes 100 et 200. Puis au cours d'une seconde séquence de durée T2, les moyens d'alimentation électrique 300 sont déconnectés de la sonde de mesure 100 et celle-ci est reliée à l'entrée de l'étage intégrateur 500. Ainsi, les moyens de commande 400 appliquent entre la sonde de mesure 100 et la sonde de référence 200, un faible champ électrique impulsionnel d'amplitude et de durée contrôlés. Un tel mode de désactivation du champ électrique appliqué sur la sonde de mesure 100 (interruption brusque par opposition à une baisse progressive de la tension) permet de bloquer les charges électriques précédemment accumulées, sur la sonde de mesure 100. Les charges électriques présentes sur la sonde de mesure 100 à la fin de la première séquence T1 sont proportionnelles à la valeur de la permittivité existant entre les sondes 100 et 200. Elles sont transférées dans l'étage intégrateur 500 (plus précisément dans le système à commutation de capacité) selon des modalités qui seront précisées par la suite. On obtient alors à la sortie de cet étage 500, un signal représentatif de la permittivité existant entre la sonde de mesure 100 et la sonde de référence 200.

Selon le mode de réalisation illustré sur la figure 1, les moyens de commande 400 comprennent une base de temps 410 formée par exemple d'un oscillateur, et deux interrupteurs inverseurs 420, 430.

L'interrupteur 420, piloté par la base de temps 410, est adapté pour relier alternativement la sonde de mesure 100 aux moyens d'alimentation 300 pendant les séquences T1, puis à l'entrée de l'étage intégrateur 500 pendant les séquences T2.

Le cas échéant, un injecteur capacitif 110 peut être intercalé entre la sonde de mesure 100 et l'interrupteur 420.

De même, le cas échéant, un injecteur résistif 120 peut en option être placé entre la sonde de mesure 100 et la sonde de référence 200. La résistance de cet injecteur 120 doit être très élevée pour ne pas créer un courant de fuite perturbateur.

L'étage intégrateur 500 illustré sur la figure 1 comprend un amplificateur opérationnel 510 et deux condensateurs de valeurs respectives connues : l'un 520 relié entre l'entrée inverseuse et la sortie de l'amplificateur 510 et formant contre réaction sur celui-ci, l'autre 530 dont une première électrode est reliée au même potentiel que la sonde de référence 200 et l'entrée non inverseuse de l'amplificateur 510, soit la masse du montage, et dont la seconde électrode est commandée par les moyens de commande 400 pour être reliée alternativement à l'entrée inverseuse de l'amplificateur 510 pendant le temps T2 (pour transférer des charges accumulées sur la sonde de mesure 100 dans le condensateur 530), puis à la sortie de l'amplificateur 510 pendant le temps T1, pour délivrer un signal électrique proportionnel aux charges accumulées sur la sonde de mesure 100.

Le condensateur 520 monté en contre réaction fixe sur l'amplificateur opérationnel 510 transforme ce dernier en intégrateur, il permet de recueillir une tension continue proportionnelle aux charges développées dans la sonde de mesure 100 et ainsi de s'affranchir des tensions parasites indésirables.

Typiquement le condensateur d'intégration 520 a une capacité au moins égale à 1000 fois la capacité du condensateur 530 de commutation pour une mesure de type analogique demandant une grande précision, par exemple pour une mesure de niveau.

Cependant, on peut en variante avoir C520 du même ordre de grandeur que C530, par exemple C520 = 2 ou 3 C530 pour une mesure rapide. Dans ce cas la mesure n'est pas précise, mais elle permet de suivre les évolutions rapides.

Le fait de basculer la sonde de mesure 100 sur un point de sommation S d'un ampli opérationnel 510 présente deux avantages. La sonde 100 est totalement déchargée, pendant le temps T2, des charges accumulées, la remettant ainsi à un potentiel nul pour une nouvelle mesure pendant le temps T1 (ceci est dû au fait que le point de sommation (S) de l'amplificateur 510 a une impédance virtuelle nulle). D'autre part toutes ces charges sont totalement transférées dans le système à commutation de capacité 520, 530 et ceci sans déperdition rendant la mesure parfaitement linéaire.

Plus précisément, le fonctionnement de l'étage intégrateur 500 est le suivant.

Supposons qu'à l'origine le condensateur d'intégration C520, le condensateur de commutation C530 et le condensateur Cs formé entre la sonde de mesure 100 et la sonde de référence 200 soient chacun totalement déchargés, soit

QC520 = 0

QC530 = 0, et

QCs = 0.

Lors de la première séquence T1, le condensateur Cs est chargé sous la tension d'alimentation délivrée par le module 300, que l'on suppose ici égale à -E.

A la fin de la séquence T1, on a donc

$$QCs = -E.Cs$$
$$QC520 = 0$$
$$QC530 = 0.$$

Au cours de la séquence T2 suivante, les charges sont transférées de Cs vers C520 ; soit, les charges étant conservées et Cs et C530 étant reliés à l'entrée inverseuse de l'amplificateur opérationnel 510 d'impédance virtuelle nulle :

- $E.Cs = V_{s2}.C520$, en appelant $V_{s2}$ la tension de sortie de l'amplificateur opérationnel 510 pendant la séquence T2.

Au cours de la séquence T1 suivante, les deux condensateurs C520 et C530 sont placés en parallèle. On a alors :

$$V_s = V_{s2}.C520 / (C520 + C530) = QC530 / C530 = QC520 / C520, \text{ soit}$$
$$QC530 = [V_{s2}.C520/(C520+C530)].C530 = [V_{s2} /(1+C530/C520).C530$$
$$\text{soit avec } C520 = nC530 \gg C530$$
$$QC530 \simeq V_{s2}. C530.$$

A la séquence suivante T2, les charges contenues dans C530 viennent en opposition de celles Cs. La partie restante des charges de Cs est transférée dans C520, etc ...

La tension de sortie $V_s$, en sortie de l'amplificateur opérationnel 510 croît progressivement jusqu'à une tension

$$V_s \text{ équilibre} = QC530/C530 \text{ telle que}$$
$$QC530 = V_s \text{ équilibre}.C530 = -E.Cs.$$

Ainsi après x itérations le dispositif atteint le régime d'équilibre sur le point de sommation. Les charges QC530 de C530 viennent compenser les charges de la sonde Cs.

Dès qu'une variation de capacité Cs est détectée, le supplément (ou la perte) de charges sur Cs vient charger (ou décharger) la capacité C520.

Ainsi en régime établi la capacité de commutation C530 vient équilibrer les variations de charges de la sonde Cs.

Le fonctionnement qui précède suppose que les interrupteurs/commutateurs 420, 430 soient parfaitement synchrones, c'est-à-dire notamment qu'au début des séquences T2, le condensateur de commutation C530 et la sonde de mesure Cs soient reliés simultanément au point de sommation de l'amplificateur opérationnel 510.

Dans le cadre de l'invention, on veillera à prendre toujours un condensateur de commutation C530 ayant une capacité du même ordre de grandeur que la capacité Cs définie entre la sonde de mesure 100 et la sonde de référence 200, soit

| de préférence | 0,1 Cs < C530 < 10Cs |
|---|---|
| avantageusement | 0,5 Cs < C530 < 5Cs et |
| très avantageusement | Cs $\simeq$ C530. |

Suivant un mode de réalisation avantageux de l'invention, la base de temps 410 génère une fréquence fixe (f) de rapport cyclique 50% délivrant deux périodes (T1) et (T2) rigoureusement identiques (T1=T2) avec (f=1/(T1+T2).

Les temps T1 et T2 étant rigoureusement identiques, la dérive à moyen terme de la fréquence f générée par l'oscillateur 410 n'intervient pas sur la précision de la mesure.

La fréquence f de répétition de la mesure est typiquement de l'ordre de 5 à 50 kHz.

Le signal disponible sur la sortie de l'étage intégrateur 500 peut être exploité de différentes manières.

On va maintenant décrire la structure de l'étage de sortie 600 illustré sur la figure 1.

Selon le mode de réalisation particulier illustré sur la figure 1, la sortie de l'amplificateur opérationnel 510 est reliée, par l'intermédiaire d'une résistance 602 à l'entrée non inverseuse d'un amplificateur opérationnel 604. Celui-ci est monté en étage suiveur. Pour cela, l'entrée inverseuse de l'amplificateur opérationnel 604 est reliée à sa sortie par l'intermédiaire d'une résistance ajustable 606. L'entrée inverseuse de l'amplificateur opérationnel 604 est également reliée à la masse par l'intermédiaire d'une résistance 608.

Le gain de l'amplificateur opérationnel 604 peut être réglé par la résistance ajustable ou potentiomètre 606 afin d'ajuster par exemple la tension de sortie du circuit à la pleine échelle choisie.

L'entrée non inverseuse de l'amplificateur opérationnel 604 reçoit par ailleurs une contre tension réglable permettant un réglage de zéro.

Cette contre tension est formée à partir d'une tension VREF de préférence identique à celle délivrée à la sortie des moyens d'alimentation 300. Cette tension VREF est appliquée aux bornes d'un potentiomètre 610 dont le point réglable de sortie attaque l'entrée non inverseuse d'un amplificateur opérationnel 612. Ce dernier a son entrée inverseuse reliée à sa sortie. Et cette dernière est reliée à l'entrée non inverseuse de l'amplificateur opérationnel 604 par l'intermédiaire d'une résistance 614 de même valeur que la résistance 602 précitée. Ainsi, l'entrée non inverseuse de l'amplificateur opérationnel 604, à très haute impédance, reçoit une contre tension de signe opposé à la pente de mesure, pour permettre le réglage du zéro par ajustement sur le potentiomètre 610.

On notera que la génération de cette contre tension à partir de la tension de référence VREF appliquée à la sonde de mesure 100 permet de s'affranchir de toute dérive éventuelle de cette tension de référence. En effet, si la tension de référence VREF dérive, la contre tension appliquée sur l'entrée non inverseuse de l'amplificateur opérationnel 604 dérive dans le même sens, corrigeant ainsi tout risque de dérive du zéro.

La sortie de l'amplificateur opérationnel 604 peut être connectée à un étage d'exploitation 620 approprié, par exemple une boucle de courant 4-20mA, ou encore un étage de traitement de signal permettant par exemple de générer un spectre caractérisant du signal pour permettre de reconnaître le produit analysé.

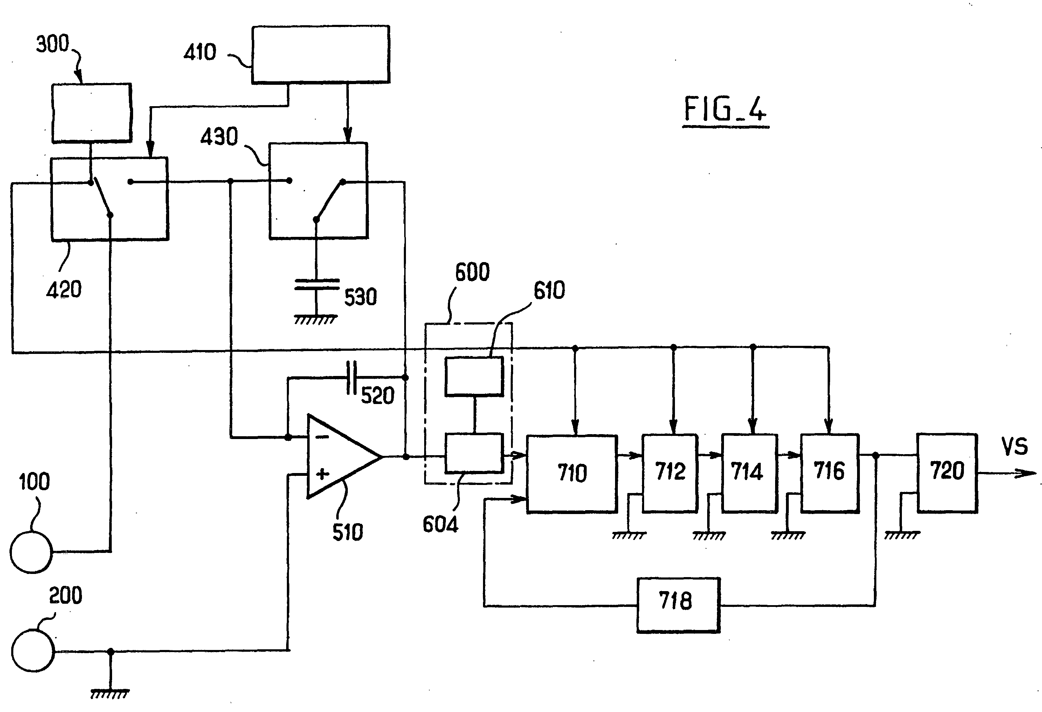

Un exemple de moyens de traitement générant un tel spectre sera décrit par la suite en regard de la figure 4.

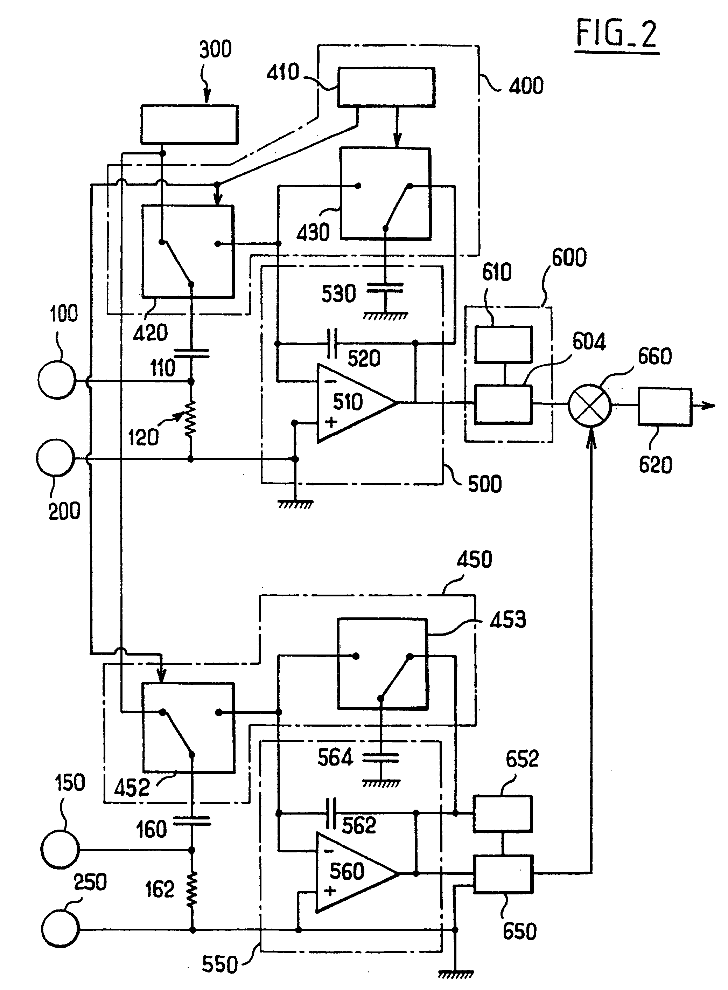

On va maintenant décnre la variante de réalisation illustrée sur la figure 2.

Le dispositif illustré sur cette figure 2 comprend une sonde de mesure 100, une sonde de référence 200, des moyens d'alimentation électriques 300, des moyens de commande 400 et un étage intégrateur 500 conformes aux dispositions décrites précédemment en regard de la figure 1.

Il est cependant adapté pour tenir compte d'une éventuelle évolution de la permittivité du milieu séparant la sonde de mesure 100 et la sonde de référence 200, par exemple pour le cas d'une mesure dans un réservoir susceptible d'accueillir différents produits successifs. A cette fin, le dispositif illustré sur la figure 2 comprend une sonde de mesure auxiliaire 150, une sonde de référence auxiliaire 250, des moyens de commande auxiliaire 450 et un étage intégrateur auxiliaire 550.

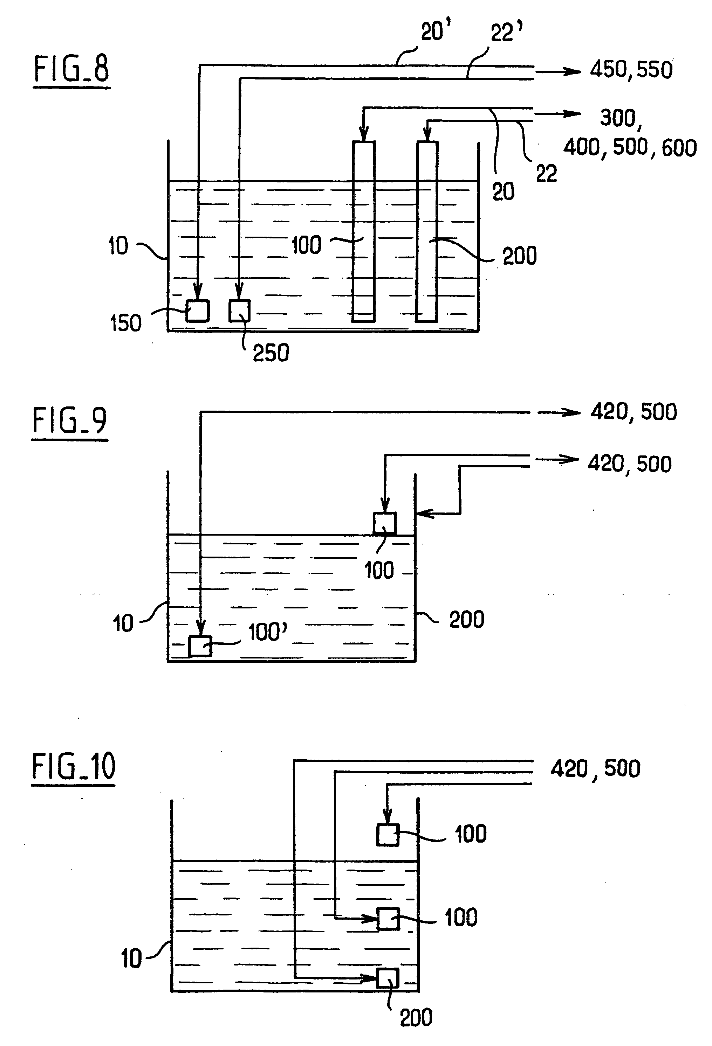

La sonde de mesure auxiliaire et la sonde de référence auxiliaire 150 et 250 sont conçues pour être placées dans le même milieu que la sonde de mesure 100 et la sonde de référence 200. Les sondes auxiliaires de mesure 150 et de référence 250 forment des sondes de compensation. A titre d'exemple non limitatif, comme on l'a illustré sur la figure 8, les sondes auxiliaires de mesure 150 et de référence 250 peuvent être placées en partie inférieure d'un réservoir destiné à contenir un produit dont on veut mesurer le niveau.

La sonde de référence auxiliaire 250 est placée au même potentiel de masse que la sonde de référence 200.

Les moyens de commande auxiliaire 450 comprennent deux interrupteurs inverseurs 452, 453 commandés respectivement au même rythme que les interrupteurs inverseurs 420, 430 par la base de temps 410

Ainsi, l'interrupteur inverseur 452, pendant les séquences T1, relie la sortie des moyens d'alimentation 300 à la sonde de mesure auxiliaire 150, le cas échéant, par l'intermédiaire d'un injecteur capacitif 160 et relie la sonde de mesure auxiliaire 150 à l'entrée inverseuse d'un amplificateur opérationnel 560 appartenant à l'étage intégrateur 550 pendant les temps T2.

Comme on le voit sur la figure 2, le cas échéant, un injecteur résistif 162 peut être placé entre la sonde de mesure 150 et la sonde de référence 250 auxiliaires, de manière comparable à l'injecteur résistif 120.

L'étage intégrateur 550 comprend deux condensateurs : l'un référencé 562, homologue du condensateur 520, relié entre l'entrée inverseuse et la sortie de l'amplificateur opérationnel 560, l'autre référencé 564, dont une borne est reliée au potentiel de masse, tandis que la seconde borne est reliée respectivement, par l'interrupteur inverseur 453, à la sortie de l'amplificateur opérationnel 560 pendant les temps T1 et à l'entrée inverseuse de l'amplificateur 560 pendant les temps T2.

L'entrée non inverseuse de l'amplificateur 560 est reliée à la masse du montage.

On obtient à la sortie de l'étage intégrateur 550, sur la sortie de l'amplificateur opérationnel 560, une tension étalon VS2 proportionelle à la permittivité du milieu analysé.

Ce signal peut être mis en forme dans un étage de sortie 650 recevant une contre tension de réglage de zéro en provenance d'un étage 652, équivalents aux moyens 604, 610 essentiellement décrits antérieurement pour l'étage 600 en regard de la figure 1.

La sortie de l'étage 650 est ici utilisée pour commander un étage d'asservissement 660 recevant par ailleurs la sortie de l'étage de mise en forme 600 associé aux sondes principales 100 et 200, pour faire varier le gain de cet étage d'asservissement 660 afin de rendre la mesure insensible aux variations de la permittivité du milieu analysé.

La sortie de l'étage 660 peut être connectée à tout circuit d'exploitation 620, tel que par exemple comme indiqué précédemment pour la figure 1, une boucle de courant 4-20mA ou un étage de traitement, par exemple apte à générer un spectre caractérisant le produit analysé.

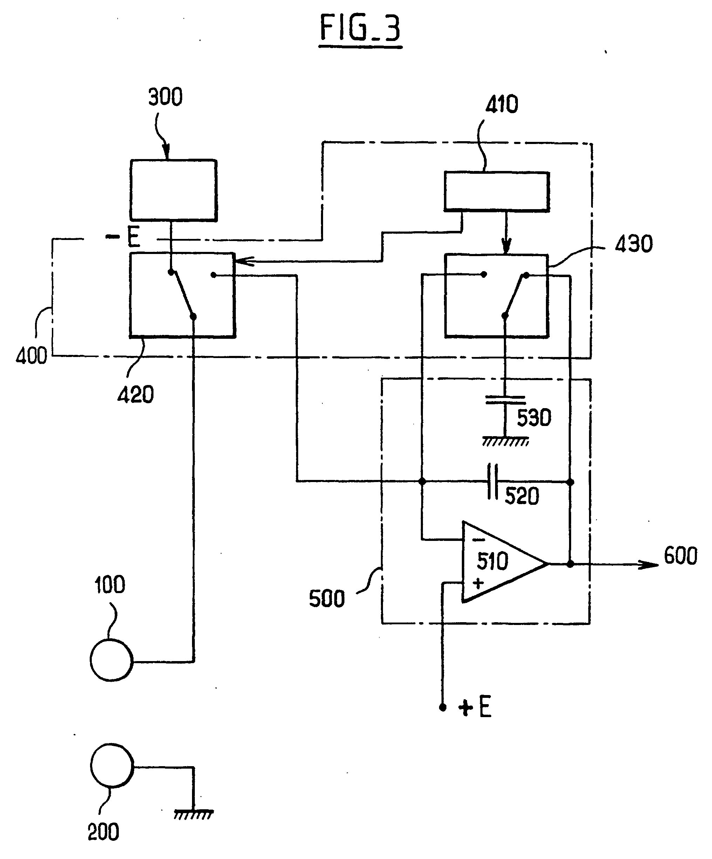

On va maintenant décrire la variante de réalisation préférentielle conforme à la présente invention illustrée sur la figure 3 annexée.

On retrouve sur cette figure 3 une sonde de mesure 100, une sonde de référence 200, des moyens d'alimentation 300, des moyens de commande 400 et un étage intégrateur 500 conformes aux dispositions décrites précédemment en regard de la figure 1.

Cependant, le circuit illustré sur la figure 3 est adapté pour neutraliser un effet possible d'hystérésis des charges accumulées sur la sonde de mesure 100 et vider celle-ci de toutes ses charges à chaque cycle piloté par les moyens de commande 400.

A cette fin, comme on le voit sur la figure 3, l'entrée non inverseuse de l'amplificateur opérationnel 510 est reliée non pas au potentiel de la sonde de référence 200 (c'est-à-dire la masse), mais à un potentiel de signe opposé, par rapport au potentiel de la sonde de référence 200, au potentiel appliqué par les moyens 300 sur la sonde de mesure 100.

Par exemple, pour un rapport cyclique de 1, c'est-à-dire pour T1=T2, les moyens d'alimentation électriques 300 peuvent appliquer une tension impulsionnelle d'amplitude -E sur la sonde de mesure 100, tandis que l'entrée non inverseuse de l'amplificateur opérationnel 510 est reliée à une tension +E, de même amplitude mais de signe opposé à la tension précitée -E.

Ainsi, pendant les temps T2 la sonde de mesure reçoit par l'intermédiaire de l'interrupteur inverseur 420 et de l'amplificateur opérationnel 510, une tension inverse de celle appliquée pendant les temps T1, propre à neutraliser l'effet d'hystérésis.

D'une façon plus générale, pour un rapport cyclique p défini par la base de temps 410, soit T1=pT2 on prendra de préférence un potentiel +E2 appliqué à l'entrée non inverseuse de l'amplificateur opérationnel 510, égale à p fois, en valeur absolue l'amplitude de la tension d'alimentation -E1 délivrée par le circuit 300 sur la sonde de mesure 100. Grâce à cette disposition, la valeur moyenne de la tension appliquée sur la sonde de mesure 100 est nulle.

On notera également que le circuit ainsi formé polarise naturellement l'amplificateur opérationnel d'entrée 510 par un courant permanent circulant par rapport au potentiel +E de la masse virtuelle et permet aux charges prélevées par la capacité de commutation 530 de venir en soustraction de ce courant permanent, ce qui permet de mesurer les valeurs de charges extrêmement faibles et permet d'obtenir un signal analogique correspondant au comptage des charges résultant de l'intégration du signal sans nécessiter d'échantillonneur bloqueur en sortie.

Selon encore une autre variante conforme à la présente invention, l'entrée non inverseuse de l'amplificateur opérationnel 510 peut être reliée à la masse du montage (soit au potentiel de la sonde de référence 200) pendant les temps T1, et au potentiel + E, par un interrupteur adapté piloté par la base de temps 410, pendant les seuls temps T2.

On va maintenant décrire la structure d'un module de reconnaissance de spectre par traitement du signal issu de l'étage intégrateur 500, pour l'identification du milieu d'analyse situé entre la sonde de mesure 100 et la sonde de référence 200, en regard de la figure 4.

On retrouve sur cette figure 4 outre la sonde de mesure 100 et la sonde de référence 200, des moyens d'alimentation électrique 300, des moyens de commande 400 et un étage intégrateur 500 conformes à ceux présentés antérieurement en regard des figures 1 ou 3.

Le signal disponible à la sortie de l'étage intégrateur 500 peut être mis en forme dans un étage de sortie 600 recevant une tension de référence ou de réglage de zéro en provenance d'un étage 610.

Les moyens de traitement additionnels 700 illustrés sur la figure 4 ont pour fonction essentielle d'amplifier très fortement le signal issu de l'étage amont 600 afin de détecter les fluctuations de ce signal, puis de numériser ce signal et enfin d'en calculer un spectre. Ils comprennent tout d'abord un étage 710 qui a pour fonction de transformer le signal échantillonné issu des moyens 600 en signaux carrés dont l'amplitude est proportionnelle à la permittivité du produit analysé. La sortie de l'étage 710 attaque l'entrée d'un amplificateur passe haut 712 à grand gain. Le signal ainsi amplifié est appliqué à un détecteur synchrone 714 destiné à restituer l'information par rapport au potentiel de référence du module (masse électrique). Ce signal passe ensuite dans un intégrateur 716 dont la constante de temps est très grande par rapport à la période d'échantillonnage. Une branche de contre réaction 718 relie la sortie de l'intégrateur 716 et une entrée de l'étage de mise en forme 710.

Ainsi, on obtient à la sortie de l'intégrateur 716 un signal très fortement amplifié et fluctuant.

La sortie de l'étage intégrateur 716 est reliée à un étage 720 de traitement proprement dit du signal

L'étage de traitement 720 comprend :

- un convertisseur analogique/numérique fournissant des valeurs numériques du signal analogique issu de l'étage intégrateur 716,
- un organe de commande contrôlant des moyens de mémorisation stockant les valeurs numériques du signal, et
- des moyens de calcul, formés par exemple d'un DSP, d'un microcontrôleur ou d'un microprocesseur.

Les moyens de calcul précités sont adaptés pour :

- effectuer des opérations de filtrage numérique récursif,
- calculer des transformées de Fourier et des densités spectrales en temps réel ou différé avec un nombre de points et une résolution suffisante et affinée selon des techniques classiques de fenêtrage (rectangulaire, Hamming, etc ... ) ou de recouvrement,
- calculer des spectres croisés en temps réel ou différé sur des intervalles de temps glissant,
- calculer des moyennes glissantes dans le domaine temporel et fréquentiel, et
- calculer des fonctions de corrélation et d'intercorrélation dans le domaine temporel ou fréquentiel et effectuer le cas échéant des recherches dans une base de données numériques stockant des signatures caractérisées.

A partir des transformées de Fourier calculées en temps réel à des intervalles de temps choisis en fonction de la résolution fréquentielle et du temps de réponse choisis (nombre de points, fréquence d'échantillonnage), le module 720 recherche la bande de fréquence pour laquelle la densité spectrale énergétique (DSE) est la plus forte. Sur No points consécutifs déterminés le module 720 calcule la moyenne glissante de cette DSE. Et en temps réel il compare cette DSE dans une bande de fréquence donnée. par rapport à une autre. Dès qu'un rapport K est atteint, on lève l'ambiguité. La valeur No, le rapport K et les bandes de fréquence choisis sont fonction des différentes matières analysées.

Le cas échéant, pour améliorer la précision, on peut opérer le même calcul, mais au lieu de traiter directement les transformées de Fourier, on peut traiter les spectres croisés calculés sur deux transformées de Fourier consécutives (Sc=(Sn-1)*(Sn*)).

Une fois le spectre obtenu, le module 720 calcule et recherche des corrélations par rapport à des spectres numériques stockés dans une base de données. Le module 720 peut lever l'ambiguité à partir d'une valeur de corrélation définissant un taux de confiance acceptable

La sonde de mesure 100 et la sonde de référence 200 peuvent être reliées aux moyens de traitement 500 par l'intermédiaire d'un cable bifilaire, de préférence blindé, ou par l'intermédiaire d'un cable coaxial dont l'âme est reliée à la sonde de mesure 100 et le blindage externe à la sonde de référence 200.

La présente invention peut trouver application dans de nombreux domaines.

A titre d'exemple non limitatif, on peut citer :

- la mesure de niveau, par exemple

  . sur des liquides ou des matériaux pulvérulents électriquement conducteurs ou isolants,
  . sur des produits pétroliers tels que des gaz de pétrole liquéfiés (GPL),
  . les détections précitées étant opérées sous forme de mesure continue de niveau ou sous forme de simples détections au niveau de repères déterminés par exemple en tant que de détecteur de niveau haut et de niveau bas, quelle que soit la nature des réservoirs impliqués, par exemple en métal ou en matière plastique,

- la discrimination analogique des produits, par exemple

  . dans le domaine automobile tel que la détermination de la qualité et/ou de l'usure de l'huile,
  . dans le domaine des produits pétroliers,
  . dans le domaine alimentaire pour le contrôle de la qualité des produits et le dosage,
  . voir dans tout autre domaine, par exemple la détection d'un type de produit dans une canalisation, par exemple la discrimination entre l'eau et le gaz dans un tuyau en matière plastique, notamment en polychlorure de vinyl (PVC),

- la détection de présence ou d'intrusion, et notamment :

  . la détection d'intrusion appliquée à la protection d'objets de toute sorte,
  . la détection d'intrusion appliquée en particulier à la protection des oeuvres d'art,
  . la détection d'intrusion appliquée pour la protection de vitrine dans un magasin,
  . la détection de présence sur un siège automobile pour l'identification de la position de l'usager pour la gestion intelligente de différents organes du véhicule automobile telle que les coussins gonflables ou airbags, la position de la colonne de direction ou hauteur de volant ou l'orientation des rétroviseurs,
  . la détection de présence ou d'intrusion appliquée aux personnes (pour application à des alarmes ou au comptage),
  . la détection de présence appliquée au comptage d'objets,
  . la détection de présence appliquée à la réalisation d'un clavier tactile.

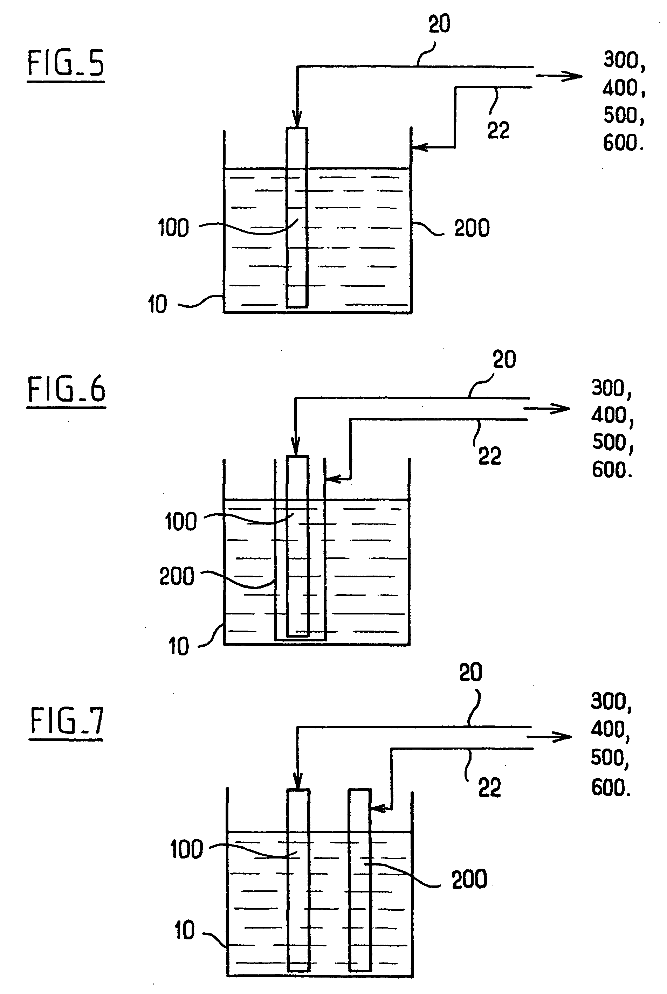

On va maintenant décrire une série d'applications conformes à la présente invention concernant la détection de niveau, en regard des figures 5 à 13.

On a représenté schématiquement sur la figure 5, un mode de mise en oeuvre dans lequel la sonde de référence 200 est constituée par la cuve 10 électriquement conductrice, par exemple métallique, contenant le produit liquide ou pulvérulent électriquement conducteur ou isolant dont on veut mesurer le niveau. Dans ce cas, la sonde de mesure 100 est formée d'un corps conducteur situé dans le réservoir 200, par exemple d'une tige de section circulaire, de préférence dans une position verticale, pour être plongée dans le milieu à analyser. De préférence, la sonde de mesure 100 présente une section droite constante sur toute sa hauteur. La sonde de mesure 100 doit bien entendu être séparée et distante de la sonde de référence 200 formée par la cuve du réservoir. Dans le cas où le produit analysé contenu dans le réservoir 200 est électriquement conducteur, la sonde de mesure 100 et/ou la sonde de référence 200 doit être revêtue d'un revêtement électriquement isolant.

La sonde de mesure 100 et la sonde de référence 200 sont reliées aux moyens de traitement et d'analyse 500 tels que décrits précédemment par tous moyens de liaison appropriés 20, 22.

A titre d'exemple non limitatif pour une sonde de mesure 100 de forme cylindrique, la tension obtenue en sortie de l'étage intégrateur 500 sera de la forme :

$$VS = (E.\eta.2.\pi.\varepsilon c.G.H) / \left( \left[ LOG \frac{(R+e)}{R} \right] + \frac{\varepsilon m.e}{\varepsilon c.R} \right)$$

Avec

$\eta = 0{,}5 = T2/(T1+T2)$ rapport cyclique neutralisant l'hystérésis rémanente de charges

$\varepsilon m$ = permittivité du liquide analysé

$\varepsilon c$ = permittivité du revêtement isolant de la sonde

$G$ = gain du système

$R$ = rayon de la sonde de mesure 100

$e$ = épaisseur du revêtement isolant sur la sonde de mesure 100

$H$ = hauteur du liquide conducteur ou du pulvérulent

$E$ = valeur du champ appliqué.

On a illustré sur la figure 6, une variante de réalisation selon laquelle la sonde de référence 200 est formée non pas par la cuve ou réservoir 10 contenant le fluide à analyser, mais par un cylindre en matériau électriquement conducteur entourant la sonde de mesure 100 et ajourée pour permettre une communication fluidique directe entre le volume interne du réservoir 10 et le volume interne de la sonde de référence 200 logeant la sonde de mesure 100.

Bien entendu lorsque le fluide analysé est électriquement conducteur, l'un au moins de la sonde de mesure 100 et de la sonde de référence 200 doit être revêtu d'un matériau électriquement isolant non poreux à l'égard du fluide.

On a illustré sur la figure 7 une autre variante de réalisation dans laquelle la sonde de référence 200 est formée d'un corps électriquement conducteur disposé dans le réservoir 10, au moins sensiblement parallèlement à la sonde de mesure 100.

On a illustré sur la figure 8, une variante de réalisation compatible avec le circuit de traitement illustré sur la figure 2.

On retrouve en effet sur cette figure 8 une sonde de mesure 100 et une sonde de mesure 200 (ici conforme à la variante de la figure 7 mais susceptible d'être conforme à l'une quelconque des autres variantes de l'invention) associées à deux électrodes 150, 250 placées à proximité du fond d'un réservoir contenant le fluide à analyser afin d'être toujours immergées dans ce milieu et reliées à l'étage intégrateur 550 par des liaisons appropriées électriquement isolées.

On a illustré sur la figure 9 une variante de réalisation conçue pour opérer en détection tout ou rien par détection du franchissement de niveaux haut et bas.

On aperçoit sur la figure 9 une sonde de référence 200 ici reliée au réservoir 10 en matériau électriquement conducteur, mais susceptible d'être formée d'un corps distinct du réservoir placé dans celui-ci, et deux sondes de mesure 100, 100' situées respectivement au niveau haut et au niveau bas à détecter. Ces deux sondes de mesure 100, 100' sont reliées successivement à des moyens d'alimentation et à des étages intégrateurs respectifs 500 par l'intermédiaire d'interrupteurs inverseurs 420 respectivement associés comme décrits précédemment pour la figure 1.

On obtient une variation de tension en sortie de l'étage intégrateur 500 associé lorsque le fluide analysé franchit, par excès ou par défaut, le niveau de la sonde de mesure 100 ou 100' considérée. Il suffit par conséquent de procéder par comparaison entre le signal de sortie des étages intégrateurs 500 et un signal de référence pour connaître le franchissement du niveau haut ou du niveau bas dans le réservoir.

Bien entendu, en variante, on peut prévoir une seule sonde de mesure détectant par exemple seulement le niveau haut ou seulement le niveau bas, ou encore un nombre de sondes de mesure supérieur à deux réparties sur la hauteur du réservoir pour détecter le franchissement de niveaux respectifs significatifs.

On a illustré sur la figure 10 une variante de réalisation comprenant deux sondes de mesure 100 disposées dans un réservoir 10 respectivement à un niveau haut et à un niveau bas à détecter et une sonde de référence 200 placée dans le réservoir à proximité du fond de celui-ci.

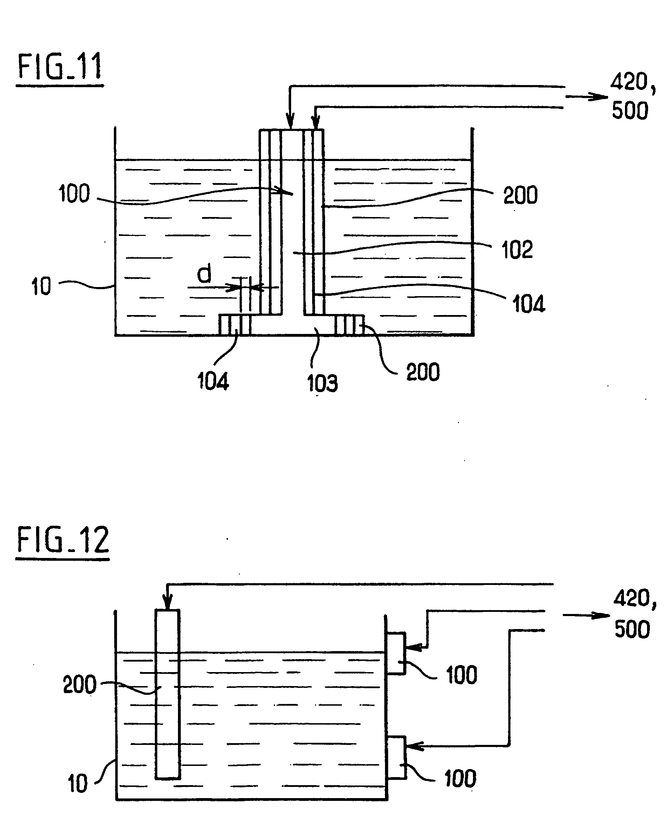

On a illustré sur la figure 11 une variante de réalisation utilisée préférentiellement pour l'identification du produit analysé, par exemple pour la mesure de la qualité de l'huile sur véhicule automobile, ou encore pour la discrimination de la qualité de produits alimentaires ou de produits pétroliers. On aperçoit sur cette figure 11 une sonde de mesure 100 comprenant une tige verticale 102 en matériau électriquement conducteur qui se termine à sa base par une couronne circulaire 103. Cette sonde de mesure 100 est recouverte au niveau de sa tige vertical 102, d'un matériau électriquement isolant 104 lui-même recouvert en périphérie d'une sonde de référence 200. Il en est de même au niveau de la couronne 103. Cependant, on notera qu'au niveau de la couronne inférieure 103 la sonde de référence 200 est espacée de l'isolant 104 ( ou la sonde de mesure 100 est espacée de l'isolant 104 ) d'une distance d pour permettre au fluide analysé de pénétrer dans l'espace ainsi défini entre l'isolant 104 et la sonde de référence 200 ou la sonde de mesure 100.

Ainsi, seule cette partie inférieure de la sonde de mesure 103 et de la sonde de référence 200 est active pour la discrimination du produit à analyser.

Bien entendu, un dispositif de détection simple tel qu'illustré sur la figure 5, peut être utilisé non pas pour la détection de niveau, mais pour la discrimination ou identification du produit analysé, par exploitation directe du signal obtenu représentatif de la permittivité du milieu situé entre les deux sondes 100 et 200.

On a illustré sur la figure 12, une autre variante de réalisation similaire aux figures 9 et 10, pour la détection de niveaux, dans laquelle les sondes de mesure 100 sont situées sur l'extérieur du réservoir 10. Cette variante s'applique typiquement au réservoir formé en un matériau électriquement isolant.

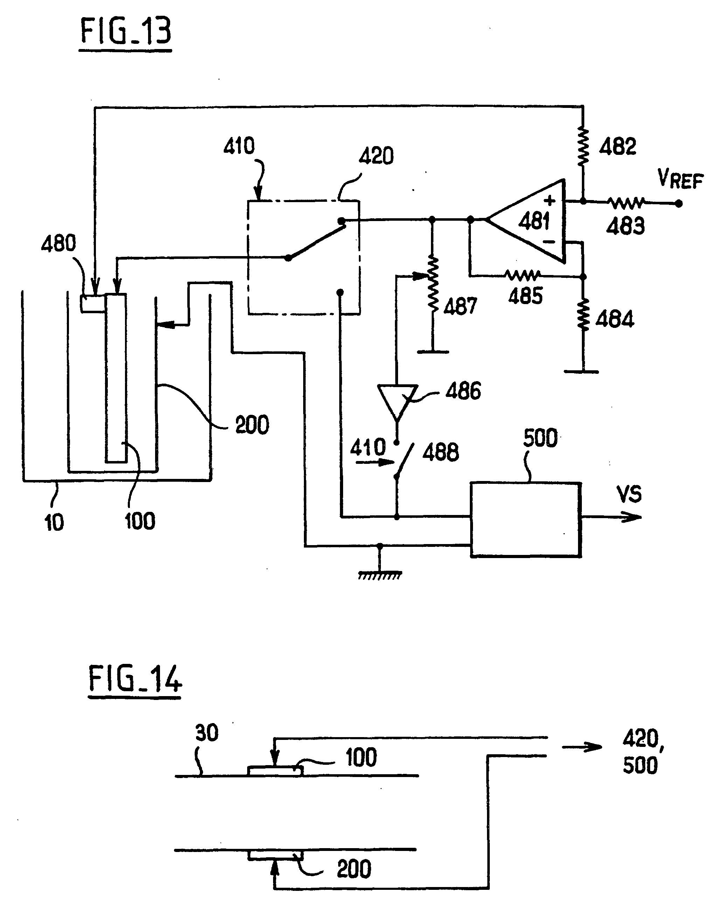

On a illustré sur la figure 13 une autre variante de réalisation comportant un capteur de température 480 pour assurer une compensation dans la mesure.

L'illustration de la figure 13 correspond à une sonde de mesure 100 et une sonde de référence 200 du type illustré sur la figure 6. Cependant, l'invention n'est pas limitée à cette variante. Elle peut s'appliquer à toute autre géométrie et disposition de sondes conforme à l'invention.

Par ailleurs, selon la figure 13 la sonde de température est placée sur la sonde de mesure 100. En variante, la sonde de température 480 peut cependant être placée en tout autre lieu.

Le signal de sortie de la sonde de température 480 illustrée sur la figure 13 est utilisé d'une part, pour corriger la valeur de la tension -E appliquée à la sonde de mesure 100 pendant les temps T1 et d'autre part, pour définir une tension de correction appliquée à l'entrée de l'étage intégrateur 500 pendant les mêmes temps T2.

Dans ce cas, la tension -E est obtenue à la sortie d'un amplificateur opérationnel 481 dont l'entrée non inverseuse est reliée d'une part, à la sortie du capteur de température 480 par une résistance 482 et d'autre part à une tension de référence fixée, par l'intermédiaire d'une résistance 483.

L'entrée inverseuse de l'amplificateur opérationnel 481 est reliée à la masse par une résistance 484 et à sa sortie par une résistance 485.

On obtient ainsi à la sortie de l'amplificateur 481 une tension - E qui varie en sens inverse de la température compensant ainsi les modifications de permittivité pour certains liquides variant avec la température:

La sortie de l'amplificateur 481 est reliée à la sonde de mesure 100 par l'intermédiaire de l'interrupteur inverseur 420 précité.

La tension de correction est prélevée par l'intermédiaire d'un amplificateur inverseur 486 sur le point réglable d'un potentiomètre 487 placé entre la masse et la sortie de l'amplificateur 481

La sortie de l'amplificateur inverseur 486 est reliée à l'entrée de l'étage intégrateur 500, pendant le temps T2 par l'intermédiaire d'un interrupteur 488 piloté par la base de temps 410.

Un circuit comportant une correction en fonction de la température à l'aide des composants 480 à 488, tel qu'illustré sur la figure 13 peut être exploité dans une application simple a la discrimination de produit sans mesure de niveau.

Suivant encore une autre variante de réalisation conforme à la présente invention, la contre-réaction appliquée sur l'amplificateur opérationnel 481, par l'intermédiaire de la résistance 482 peut provenir non pas d'un capteur de température, mais d'un étage de traitement recevant un signal en provenance d'une sonde de mesure similaire à la sonde 150 illustrée sur la figure 8 pour assurer une correction en fonction de la permittivité réelle du milieu détecté.

D'une façon générale dans le cadre de la présente invention, on peut compenser la tension d'offset initial de deux façons : a) en neutralisant l'offset initial par un amplificateur suivant le système à commutation de capacité 600 et en appliquant une contre tension de signe opposé au champ appliqué sur le point de sommation de l'amplificateur opérationnel 510 ou b) en appliquant d'une manière synchrone, sur le point de sommation de l'amplificateur à commutation de capacité 600, pendant le comptage des charges, une contre tension de signe opposé au champ appliqué.

La figure 14 illustre une variante de réalisation pour la détection ou discrimination de produits, par exemple entre des produits solides, liquides ou gazeux, tels que de l'eau ou du gaz, dans un conduit non conducteur 30. On distingue à cette fin sur la figure 14, deux sondes respectivement de mesure 100 et de référence 200 placées sur la paroi de la canalisation 30, par exemple mais non limitativement de manière diamétralement opposée. En variante, en effet, on peut prévoir de disposer les sondes de mesure 100 et de référence 200 décalées axialement ou encore selon des positions angulaires non diamétralement opposées. Le cas échéant les sondes 100 et 200 sont protégées des milieux circulant dans le conduit 30 par un revêtement étanche à l'égard de ces milieux. Un tel dispositif permet notamment de détecter la présence d'eau dans un gaz.

L'étage intégrateur 500 formant système de comptage de charges délivre à sa sortie une tension proportionnelle à la permittivité du produit situé entre les électrodes 100 et 200 Le rapport entre la permittivité de l'eau et la permittivité de la plupart des gaz étant supérieur à 15, ces moyens permettent aisément de disciminer la présence d'eau ou de gaz dans le conduit.

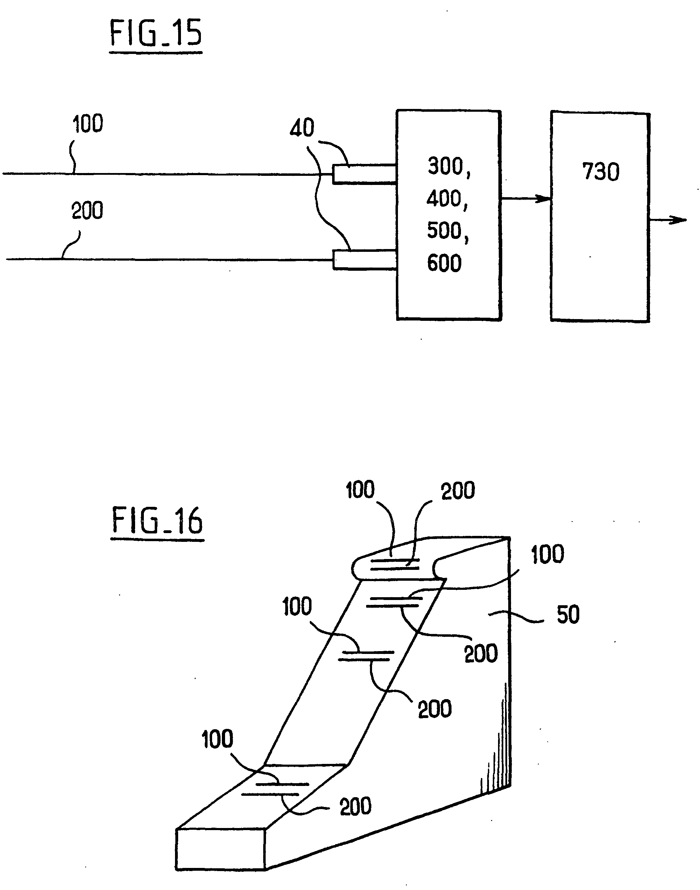

On a illustré sur la figure 15 une variante de réalisation appliquée à la détection d'intrusion. Dans ce cas, la sonde de mesure et la sonde de référence sont formées de corps conducteurs, par exemple de fils électriques, qui cheminent le long d'une zone à surveiller. A titre d'exemple non limitatif, la distance entre les deux sondes 100 et 200 peut être de l'ordre de 5cm.

D'une façon plus générale dans le cadre de la présente invention, la distance entre les deux sondes 100 et 200 peut être comprise typiquement entre 1 et 10 cm, soit très préférentiellement de l'ordre de 5 cm.

Les corps composant les sondes 100, 200 peuvent être partiellement isolés ou blindés électriquement sur leur longueur, pour les zones de ces sondes non significatives. Une telle isolation ou blindage local peut être formé en entourant la sonde de mesure 100 localement par une gaine conductrice 40 référencée au potentiel de la sonde de référence 200. Tout déplacement d'une personne ou d'un objet dans l'environnement des sondes 100, 200 modifie la permittivité du milieu et entraîne donc une variation de la tension en sortie de l'étage intégrateur 500 et permet une détection d'intrusion. A titre d'exemple, le circuit conforme à l'invention permet pour une tension appliquée entre la sonde de mesure 100 et la sonde de référence 200 de l'ordre de 4 volts de détecter un déplacement jusqu'à 40cm des sondes.

Il a été constaté que l'environnement peut, dans le temps, générer une tension de dérive ou d'offset en fonction de la température ambiante et du degré hydrométrique. On peut corriger celle-ci à l'aide d'un module 730 comme illustré sur la figure 15 calculant la valeur moyenne de cette dérive et corrigeant le signal en conséquence. Dans ce contexte on peut discriminer, selon le sens, positive ou négatif, de l'évolution de la tension détectée en sortie de l'étage 500, entre une intrusion ou apport d'objet ou un retrait, par rapport à l'environnement des sondes 100 et 200.

La correction basée sur l'évolution de la permittivité ambiante en fonction notamment du degré d'hygrométrie et de la température, peut en variante être obtenue à l'aide d'un signal de référence généré par un étage intégrateur additionnel piloté par des sondes de mesure et de référence additionnelles placées dans le même environnement que les sondes de mesure et de référence utilisées pour assurer la détection, mais en un lieu inaccessible à une intrusion et donc non sensible à une telle influence.

Une variante du dispositif illustrée sur la figure 15 peut être utilisée pour la protection de tableau ou d'objet d'art ou équivalent.

Il suffit pour cela par exemple de placer les deux sondes 100 et 200 à proximité de l'oeuvre à protéger de sorte que tout déplacement de cet objet ou pénétration dans l'environnement des sondes, génère une variation du signal en sortie de l'étage intégrateur 500 associé.

Bien entendu on peut prévoir une paire de sondes 100, 200 respectivement dédiée à chaque objet à surveiller, ou une paire de sondes 100, 200 associées à un ensemble de tels objets à surveiller, par exemple dans une vitrine ou sur un lieu de démonstration ou d'exposition. Il suffit dans ce dernier cas à veiller à donner aux deux sondes 100, 200 une longueur suffisante pour couvrir tout l'environnement des objets en question. Les sondes 100, 200 peuvent être sous ou derrière le support des objets à surveiller. Là encore comme pour les autres modes de réalisation conformes à la présente invention, il convient de veiller à neutraliser les zones des fils de liaison de ces sondes, non dédiées à la détection, pour éviter de fausses alarmes. Par ailleurs l'endroit ou sont placés les objets, par exemple table, présentoir ou vitrine, ne doit pas être métallique ni comporter de structures électriquement conductrices reliées à la terre.

On a schématisé sur la figure 16 une variante du système pour la détection de la présence et/ou de la position d'un usager sur un siège 50 par exemple d'un véhicule ou d'un aéronef. Un tel système peut être utilisé par exemple pour détecter la position, la direction ou la présence d'un usager afin d'assurer un contrôle intelligent d'un coussin gonflable en cas de choc.

Dans ce cas, le siège est équipé de préférence de plusieurs paires de sondes de mesure 100 et de sondes de référence 200 disposées, par exemple sous la housse du siège, en regard de zones caractéristiques, par exemple au niveau des jambes, du dos, des épaules et de la tête. Les sorties de ces sondes peuvent être dirigées vers des étages de traitement respectifs ou encore être reliées à un étage de traitement commun par l'intermédiaire d'un multiplexeur.

L'exploitation des signaux délivrés par les sondes peut faire l'objet de nombreuses variantes. A titre d'exemple non limitatif, un calculateur peut procéder à la sommation, selon une pondération déterminée, des signaux issus de chacune des sondes.

Un tel dispositif permet par exemple de distinguer un enfant d'un adulte, pour commander en conséquence un coussin gonflant, afin d'éviter de blesser l'usager, lors d'une mise en oeuvre.

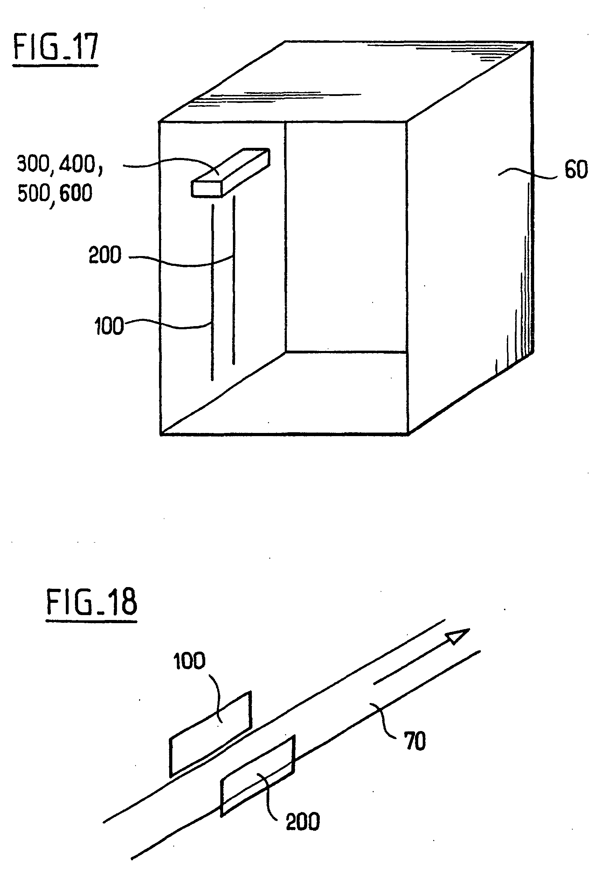

On a illustré sur la figure 17 une variante de réalisation conçue pour la détection du passage de personnes ou d'objets dans un portique 60, par exemple à des fins de comptage ou d'alarme.

Dans ce cas, les deux sondes de mesure 100 et de référence 200 sont placées par exemple parallèlement sur une paroi du portique 60, par exemple une paroi latérale verticale. A titre d'exemple non limitatif, les deux sondes 100, 200 peuvent être formées de fils électriques s'étendant sur toute la hauteur du portique 60 et séparées d'une distance de l'ordre de 5 cm. De préférence le portique 60 ne comporte pas d'autres structures électriquement conductrices, notamment métalliques, reliées à la terre.

Le même type de dispositif peut être utilisé pour la détection de passage, déplacement, ou encore comptage d'objets. On peut par exemple et non limitativement utiliser pour cela une sonde de mesure 100 et une sonde de référence 200 disposées respectivement de part et d'autre d'un tapis 70 assurant le déplacement des objets comme illustré sur la figure 18, ou encore juxtaposés le long de ce tapis.

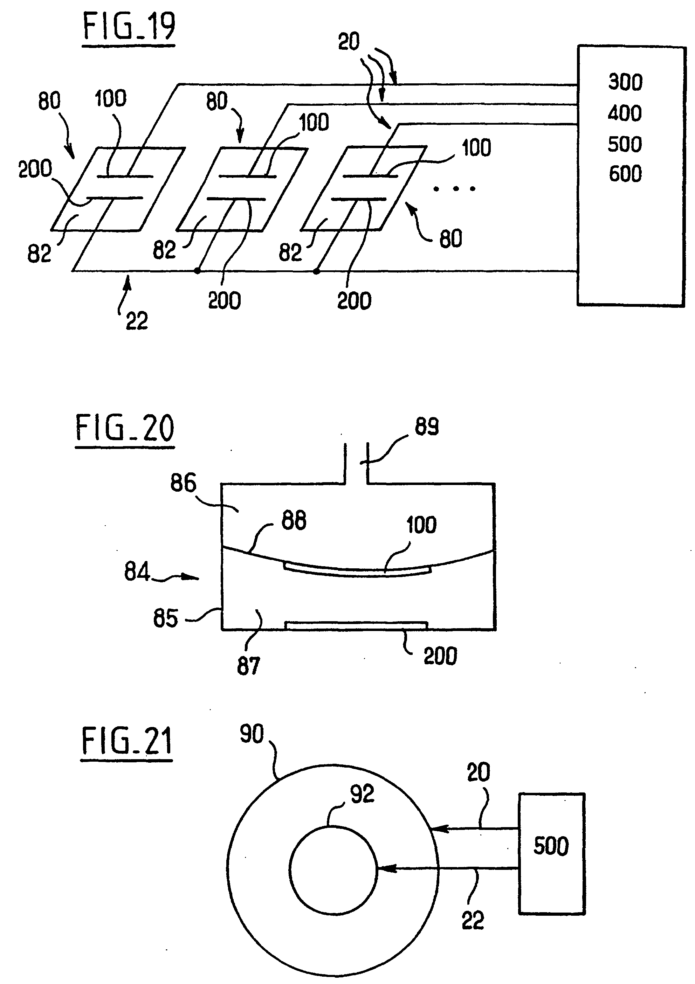

On a schématisé sur la figure 19 une variante de réalisation de l'invention, sous forme d'un clavier de touches 80. Chacune des touches 80 est formée par deux plages en matériau électriquement conducteur, formant respectivement une sonde de mesure 100 et une sonde de référence 200, disposées sur un support 82, de préférence sous un écran électriquement isolant sérigraphié, par exemple formé d'une feuille en matière plastique. Les deux sondes 100 et 200 peuvent par exemple être séparées de quelques mm. La permittivité du milieu environnant les sondes 100 et 200 varie lorsqu'un utilisateur approche de la zone de détection correspondante matérialisée par ces sondes, ce qui entraine une variation du niveau de sortie d'un étage intégrateur de charge associé. Les sondes 100 et 200 sont reliées aux moyens de traitement 500 par tous moyens appropriés 20, 22 Les moyens de liaison ainsi formés doivent être neutralisés par un blindage, en dehors des zones de détection recherchée, pour éviter des effets de détection parasites lorsque l'utilisateur approche de ces zones de liaison. Les sondes de référence 200 sont de préférence toutes reliées entre elles. Chaque touche formée par une paire de sondes 100 et 200 peut être reliée à un étage intégrateur 500 respectif. Cependant de préférence les différentes touches sont reliées à un étage intégrateur commun par l'intermédiaire d'un multiplexeur. Dans ce cas chacune des touches est commandée successivement par la séquence T1, T2 précitée et une évolution du signal en sortie de l'étage intégrateur 500 est attribuée à la touche commandée en synchronisme.

On a illustré sur la figure 20 une autre variante de réalisation conforme à la présente invention, formant capteur de pression. Dans ce cas les deux sondes 100 et 200 sont placées respectivement sur deux éléments d'un capteur susceptibles de déplacement relatif sous l'effet d'une pression appliquée. Selon la représentation illustrée sur la figure le capteur 84 comprend un boitier 85 divisé en deux chambres 86, 87 par une membrane souple déformable 88 sous l'effet de la pression appliquée dans une première chambre 86 par l'intermédiaire d'un ajutage 89. L'une des deux sondes, telle que la sonde de mesure 100, est placée sur la membrane déformable 88, et l'autre, telle que la sonde de référence 200, sur une paroi fixe du boitier de capteur, par exemple la paroi de fond de la seconde chambre 87, ou inversement. La seconde chambre 87 peut être fermée ou mise à l'air libre ou encore communiquée avec une pression de référence. La membrane déformable 88 peut être associée ou non à un ressort de sollicitation taré. Les sondes 100 et 200 sont reliées à un étage intégrateur 500, par tous moyens appropriés, par exemple par l'intermédiaire d'un conducteur souple, pour la sonde placée sur la membrane déformable. La tension de sortie de l'étage intégrateur 500 associé au capteur illustré sur la figure varie de manière inversement proportionnelle à la distance séparant les sondes 100 et 200 traduisant les variations de pression.

On a illustré sur la figure 21 une autre variante de réalisation conforme à la présente invention, formant capteur de l'état de gonflement d'un pneumatique 90. Dans ce cas une sonde de mesure 100 et une sonde de référence 200 sont disposées respectivement dans deux zones du pneumatique ou de la structure associée à celui-ci, susceptibles de déplacement relatif selon l'état de gonflement du pneumatique. A titre d'exemple non limitatif, la sonde de mesure 100 peut être constituée par la carcasse radiale métallique du pneumatique 90, tandis que la sonde de référence 200 est constituée par la jante ou un ruban métallique implanté sur la jante 92 et isolé de celle-ci par un matériau électriquement isolant, tel qu'un élastomère, ou inversement. Les sondes 100 et 200 sont reliées par tous moyens appropriés, par exemple une liaison blindée 20/22, à un étage intégrateur 500 placé sur la jante. La distance entre les deux sondes 100 et 200 varie en fonction de l'état de gonflement du pneumatique. Il en est donc de même pour le niveau du signal obtenu en sortie de l'étage intégrateur 500. La liaison entre la jante et le moyeu du véhicule ou plus généralement le chassis de celui-ci, pour la transmission de l'information correspondante, peut être opérée par tous moyens appropriés, par exemple par un transpondeur électromagnétique ou une liaison optique.

Bien entendu la présente invention n'est pas limitée aux modes de réalisation précédemment décrits, mais s'étend à toutes variantes conformes à son esprit.

La présente invention offre de nombreux avantages par rapport aux dispositifs de mesure antérieurement proposés.

Elle permet notamment d'obtenir un circuit très sensible apte à mesurer par exemple des valeurs de capacité aussi faibles que quelques centaines de femto coulombs.

La présente invention permet également de réaliser des moyens de détection présentant une parfaite isolation galvanique et par conséquent une sécurité totale pour l'utilisateur. Il suffit pour cela de protéger les sondes 100 et 200 par un écran parfaitement électriquement isolant, par exemple mais non limitativement sous forme d'un écran tactile. Un tel dispositif peut par exemple trouver application dans la gestion des utilitaires dans un environnement sensible, par exemple une salle de bain. Dans ce cas l'invention peut être concrétisée par un panneau de zones ou touches associées chacune à une sonde de mesure respective 100, pour assurer la commande d'une fonction spécifique, telle qu'une commande de fermeture/ouverture de robinet ou vanne, une fonction « réglage de débit », une fonction « eau chaude », une fonction « eau froide », ou encore toute autre fonction équivalente, par exemple par l'intermédiaire d'un organe électro-mécanique adapté.

**Revendications**

**1.** Dispositif de mesure exploitant une mesure indirecte de permittivité, comprenant deux corps électriquement conducteurs constituant respectivement une sonde de mesure (100) et une sonde de référence (200), des moyens d'alimentation électrique (300) aptes à délivrer une tension électrique continue d'amplitude contrôlée, un étage intégrateur (500) comprenant un système à commutation de capacité (530) et des moyens de commande (400) adaptés pour définir cycliquement, à une fréquence contrôlée, une suite de deux séquences : une première séquence (T1) au cours de laquelle les moyens d'alimentation électrique (300) sont reliés à la sonde de mesure (100) pour appliquer un champ électrique entre la sonde de mesure (100) et la sonde de référence (200) et accumuler des charges électriques sur la sonde de mesure (100), puis une seconde séquence (T2) au cours de laquelle les moyens d'alimentation électrique (300) sont déconnectés de la sonde de mesure (100) et celle-ci est reliée à un point de sommation de l'étage intégrateur (500) pour transférer des charges dans l'étage intégrateur (500) et obtenir en sortie de celui-ci un signal représentatif de la permittivité existant entre la sonde de mesure (100) et la sonde de référence (200), l'étage intégrateur (500) comprenant un amplificateur opérationnel (510), et un condensateur d'intégration (520) monté en contre réaction sur cet amplificateur (510) **caractérise par le fait que** l'étage intégrateur (500) comprend un second condensateur (530) commuté entre la sortie et l'entrée de l'amplificateur opérationnel (510) au rythme des séquences (T1, T2) pilotées par des moyens de commande (400), de sorte que en régime d'équilibre établi, on obtienne en sortie de l'amplificateur opérationnel (510), une tension "Vs équilibre" égale à : -Ecs/C530, relation dans laquelle -E désigne l'amplitude de la tension aux bornes des moyens d'alimentation électrique (300), et Cs et C530 désignent respectivement les valeurs des capacités définies entre la sonde de mesure (100) et la sonde de référence d'une part et le second condensateur commuté (530) d'autre part.

**2.** Dispositif selon la revendication 1, **caractérisé par le fait que** le condensateur commuté (530) a une capacité du même ordre de grandeur que la capacité définie entre la sonde de mesure (100) et la sonde de référence (200).

**3.** Dispositif selon l'une des revendications 1 ou 2, **caractérisé par le fait que** le condensateur d'intégration (520) est placé entre l'entrée inverseuse et la sortie de l'amplificateur opérationnel (510).

**4.** Dispositif selon l'une des revendications 1 à 3, **caractérisé par le fait que** le condensateur commuté (530) est relié à la sortie de l'amplificateur opérationnel (510) pendant les séquences (T1) d'alimentation de la sonde de mesure (100) et à l'entrée de l'amplificateur opérationnel (510) pendant les séquences (T2) de liaison de la sonde de mesure (100) sur l'entrée de cet amplificateur (510).

5. Dispositif selon l'une des revendications 1 à 4, **caractérisé par le fait que** le condensateur commuté (530) est commuté à des instants simultanés à la commutation de la sonde de mesure (100).

6. Dispositif selon l'une des revendications 1 à 5, **caractérisé par le fait qu'**il comprend des moyens aptes à appliquer une tension moyenne nulle sur la sonde de mesure (100).

7. Dispositif selon les revendications 1 et 6 prises en combinaison, **caractérisé par le fait que** l'amplificateur opérationnel (510) reçoit sur une seconde entrée, opposée à celle destinée à être reliée séquentiellement à la sonde de mesure. (100) une tension (+E) de signes opposés à la tension (-E) appliquée par les moyens d'alimentation sur la sonde de mesure.

8. Dispositif selon la revendication 7, **caractérisé par le fait que** la tension (+E2) appliquée sur la seconde entrée de l'amplificateur opérationnel (510) est égale à p fois, en valeur absolue, l'amplitude de la tension d'alimentation (-E1) délivrée par les moyens d'alimentation (300) à la sonde de mesure (100).

9. Dispositif selon l'une des revendications 1 à 8, **caractérisé par le fait que** les moyens de commande (400) sont adaptés pour définir un rapport cyclique de 50%, soit deux séquences (T1, T2) successives de même durée.

10. Dispositif selon l'une des revendications 1 à 9, **caractérisé par le fait que** les moyens de commande (400) sont adaptés pour appliquer des échelons de tension sur la sonde de mesure (100).

11. Dispositif selon l'une des revendications 1 à 10, **caractérisé par le fait que** les moyens de commande définissent des cycles de séquence (T1 et T2) à une fréquence comprise entre 5 et 50 kHz.

12. Dispositif selon l'une des revendications 1 à 5 et 7, **caractérisé par le fait que** le condensateur (520) monté en contre réaction de l'amplificateur opérationnel (510) possède une capacité au moins 1000 fois égale à celle du condensateur de commutation (530).

13. Dispositif selon l'une des revendications 1 à 12, **caractérisé par le fait que** l'étage intégrateur est relié à rentrée d'un étage de traitement (600) comprenant un moyen de réglage de zéro (610, 612, 614).

14. Dispositif selon l'une des revendications 1 à 13, **caractérisé par le fait que** l'étage intégrateur (500) est relié à un étage de traitement (600) comprenant des moyens (606) de réglage pleine échelle.

15. Dispositif selon l'une des revendications 1 à 14, **caractérisé par le fait qu'**il comprend en outre au moins une sonde de mesure auxiliaire (150) utilisée pour déterminer la permittivité de l'environnement des sondes de mesure et de référence (100, 200) et apporter une correction au traitement du signal.

16. Dispositif selon la revendication 15, **caractérisé par le fait que** la sonde auxiliaire de mesure (150) est placée à proximité du fond d'un réservoir.

17. Dispositif selon l'une des revendications 1 à 16, **caractérisé par le fait qu'**il comprend en outre une sonde de température apte à mesurer la température de l'environnement de la sonde de mesure (100) et de la sonde de référence (200).

18. Dispositif selon l'une des revendications 15 à 17, **caractérisé par le fait que** les moyens de correction (150, 480) sont adaptés pour modifier le gain d'un étage d'asservissement (660).

19. Dispositif selon l'une des revendications 1 à 17, **caractérisé par le fait que** les moyens de correction (150, 480) sont adaptés pour opérer une compensation sur la tension appliquée par les moyens d'alimentation (300) sur la sonde de mesure (100).

20. Dispositif selon l'une des revendications 1 à 17 et 19, **caractérisé par le fait que** les moyens de correction (150, 480) sont adaptés pour générer une tension de correction appliquée sur l'entrée de l'étage intégrateur (500).

**21.** Dispositif selon l'une des revendications 1 à 20, **caractérisé par le fait qu'**il comprend des moyens de compensation de la tension d'offset initiale de l'étage intégrateur (500).

**22.** Dispositif selon la revendication 21, **caractérisé par le fait que** les moyens de compensation de la tension d'offset comprennent un amplificateur disposé en aval du système à commutation de capacité (600) adapté pour appliquer une contre tension de signes opposés au champ appliqué sur le point de sommation de l'étage intégrateur (500).

**23.** Dispositif selon la revendication 21, **caractérisé par le fait que** les moyens de compensation d'offset comprennent des moyens aptes à appliquer de manière synchrone sur le point de sommation de l'amplificateur à commutation de capacité (600), pendant le comptage des charges, une contre tension de signes opposés au champ appliqué.

**24.** Dispositif selon l'une des revendications 1 à 23, **caractérisé par le fait qu'**il comprend en outre des moyens aptes à générer un signal représentant le spectre du milieu environnant la sonde de mesure (100).

**25.** Dispositif selon la revendication 24, **caractérisé par le fait que** les moyens d'analyse de spectre comprennent des moyens de calcul de transformer de Fourier et des moyens de comparaison des spectres obtenus avec des spectres numériques stockés dans une base de données.

**26.** Dispositif selon l'une des revendications 24 ou 25, **caractérisé par le fait que** les moyens d'analyse de spectres comprennent un étage de mise en forme (710), un étage passe haut (712) à grand gain, un détecteur synchrone (714), un intégrateur (716) et un étage de calcul (720).

**27.** Dispositif selon l'une des revendications 1 à 26, **caractérisé par le fait qu'**il comprend deux corps électriquement conducteurs (100, 200) formant respectivement sonde de mesure et sonde de référence situées à des distances comprises entre 1 et 10cm, préférentiellement de l'ordre de 5cm.

**28.** Dispositif selon l'une des revendications 1 à 27, **caractérisé par le fait que** l'une au moins des sondes de mesure (100) ou de référence (200) est munie d'un revêtement électriquement isolant et étanche à l'égard du milieu environnant la sonde.

**29.** Dispositif selon l'une des revendications 1 à 28, **caractérisé par le fait que** certains tronçons au moins des moyens de liaison (20, 22) raccordant la sonde de mesure (100) sont neutralisés par une gaine en matériau électriquement conducteur placé au même potentiel que la sonde de référence (200).

**30.** Dispositif selon l'une des revendications 1 à 29, **caractérisé par le fait qu'**il est adapté pour opérer une fonction choisie dans le groupe comprenant une mesure de niveau, une discrimination entre produits ou une détection de présence ou d'intrusion.

**31.** Dispositif selon l'une des revendications 1 à 30, **caractérisé par le fait qu'**il comprend plusieurs sondes de mesure (100) reliées à des étages intégrateurs respectifs (500).

**32.** Dispositif selon l'une des revendications 1 à 30, **caractérisé par le fait qu'**il comprend plusieurs sondes de mesure (100) reliées à un étage intégrateur (500) commun par l'intermédiaire d'un multiplexeur.

**33.** Dispositif selon l'une des revendications 1 à 32, **caractérisé par le fait qu'**il constitue un dispositif de mesure de niveau.

**34.** Dispositif selon la revendication 33, **caractérisé par le fait que** la sonde de mesure (100) est située dans une direction générale verticale dans un réservoir (10) et **par le fait que** l'étage intégrateur (500) est relié à des moyens de traitement (600) adaptée pour générer un signal représentatif du niveau de fluide dans le réservoir (10).

**35.** Dispositif selon la revendication 33, **caractérisé par le fait que** la sonde de mesure (100) est formée par une plage électriquement conductrice disposée dans un réservoir (10) à une hauteur correspondant à un niveau de scrutation.

**36.** Dispositif selon l'une des revendications 33 et 35, **caractérisé par le fait qu'**il comprend plusieurs sondes de mesure (100) disposées à des niveaux de discrimination respectifs dans un réservoir (10).

**37.** Dispositif selon l'une des revendications 33 à 36, **caractérisé par le fait que** le fluide a détecté est électriquement conducteur et que l'une au moins de la sonde de mesure (100) ou de la sonde de référence (200) est munie d'un revêtement électriquement isolant.

**38.** Dispositif selon l'une des revendications 1 à 37, **caractérisé par le fait que** la sonde de référence (200) est formée par le réservoir.

**39.** Dispositif selon rune des revendications 1 à 37, **caractérisé par le fait que** la sonde de référence (200) est formée d'un élément ajouré qui entoure la sonde de mesure (100).

**40.** Dispositif selon l'une des revendications 1 à 33, **caractérisé par le fait qu'**il constitue un dispositif de discrimination du produit circulant dans une canalisation (30) équipé d'une sonde de mesure (100) et d'une sonde de référence (200).

**41.** Dispositif selon l'une des revendications 1 à 33, **caractérisé par le fait qu'**il comprend une sonde de mesure (100) et une sonde de référence (200) qui chemine le long d'une zone à surveiller pour former dispositif détecteur d'intrusion;

**42.** Dispositif selon l'une des revendications 1 à 33, **caractérisé par le fait qu'**il comprend plusieurs paires d'électrodes de mesure (100) et d'électrodes de référence (200) réparties sur un siège pour permettre la détection de la présence et/ou de la position d'un usager.

**43.** Dispositif selon l'une des revendications 1 à 33, **caractérisé par le fait qu'**il comprend une sonde de mesure (100) et une sonde de référence (200) le long d'une paroi d'un portique (60) pour former détecteur de passage.

**44.** Dispositif selon l'une des revendications 1 à 33, **caractérisé par le fait qu'**il comprend une sonde de mesure (100) et une sonde de référence (200) placées sur le côté d'une bande transporteuse pour la détection de passage d'objets.

**45.** Dispositif selon l'une des revendications 1 à 33, **caractérisé par le fait qu'**il comprend plusieurs paires de sondes de mesure (100) et de sondes de référence (200) pour la réalisation d'un clavier à touches tactiles.

**46.** Dispositif selon l'une des revendications 1 à 33, **caractérisé par le fait que** l'une des souches de mesure (100) ou de référence (200) est placée sur un élément déformable (88) pour former un capteur de pression.

**47.** Dispositif selon l'une des revendications 1 à 33, **caractérisé par le fait que** la sonde de mesure (100) et la sonde de référence (200) sont placées sur deux zones d'un pneumatique susceptible de déplacement relatif en fonction de l'état de gonflement de celui-ci, pour former un capteur de gonflement de pneumatique.

**Patentansprüche**

**1.** Meßvorrichtung, die eine indirekte Messung der Permittivität einsetzt, die folgendes umfaßt: zwei elektrisch leitende Körper, die eine Meßsonde (100) beziehungsweise eine Bezugssonde (200) bilden, Mittel zur elektrischen Versorgung (300), die dazu ausgestaltet sind eine elektrische Gleichspannung geregelter Amplitude bereitzustellen, eine Integratorstufe (500), die ein Kapazitäts-Umschaltsystem (530) umfaßt, und Steuerungsmittel (400), die dazu ausgestaltet sind, mit einer kontrollierten Frequenz periodisch eine Folge von zwei Sequenzen zu bilden: eine erste Sequenz (T1), in deren Verlauf die Mittel zur elektrischen Versorgung (300) mit der Meßsonde (100) verbunden sind, um zwischen der Meßsonde (100) und der Bezugssonde (200) ein elektrisches Feld herzustellen und auf der Meßsonde (100) elektrische Ladungen zu sammeln, dann eine zweite Sequenz (T2), in deren Verlauf die Mittel zur elektrischen Versorgung (300) von der Meßsonde (100) getrennt werden und diese mit einem Summationspunkt der Integratorstufe (500) verbunden wird, um die Ladungen in die Integratorstufe (500) zu transportieren und an deren Ausgang ein für die zwischen der Meßsonde (100) und der Bezugssonde (200) auftretende Permittivität repräsentatives Signal zu erhalten, wobei die Integratorstufe (500) einen Operationsverstärker (510) und einen Integrationskondensator (520), der in Gegenkopplung zu diesem Verstärker (510) geschaltet ist, umfaßt, **dadurch gekennzeichnet, daß** die Integratorstufe (500) einen zweiten Kondensator (530) umfaßt, der im Takt der Sequenzen (T1, T2), gesteuert durch die Steuerungsmittel (400), zwischen dem Ausgang und dem Eingang des Operationsverstärkers (510) derart umgeschaltet wird, daß im vorgesehenen Gleichgewichtszustand am Ausgang des Operationsverstärkers (510) eine Spannung "Vs Gleichgewicht" von -Ecs/C530 erhalten wird, wobei in dieser Gleichung -E die Amplitude der Spannung an den Klemmen der Mittel zur elektrischen Versorgung (300) bezeichnet und Cs und C530 die Werte der Kapazitäten zwischen der Meßsonde (100) und der Bezugssonde zum einen beziehungsweise des zweiten umschaltbaren Kondensators (530) zum anderen bezeichnen.

2. Vorrichtung nach Anspruch 1, **dadurch gekennzeichnet, daß** der umschaltbare Kondensator (530) eine Kapazität in derselben Größenordnung wie die zwischen der Meßsonde (100) und der Bezugssonde (200) festgelegte Kapazität hat.

3. Vorrichtung nach einem der Ansprüche 1 oder 2, **dadurch gekennzeichnet, daß** der Integrationskondensator (520) zwischen dem invertierenden Eingang und dem Ausgang des Operationsverstärkers (510) angeordnet ist.

4. Vorrichtung nach einem der Ansprüche 1 bis 3, **dadurch gekennzeichnet, daß** der umschaltbare Kondensator (530) mit dem Ausgang des Operationsverstärkers (510) während der Sequenzen (T1) der Versorgung der Meßsonde (100) verbunden ist und mit dem Eingang des Operationsverstärkers (510) während der Sequenzen (T2) der Verbindung der Meßsonde (100) mit dem Eingang dieses Verstärkers (510) verbunden ist.

5. Vorrichtung nach einem der Ansprüche 1 bis 4, **dadurch gekennzeichnet, daß** die Umschaltung des umschaltbaren Kondensators (530) gleichzeitig mit der Umschaltung der Meßsonde (100) erfolgt.

6. Vorrichtung nach einem der Ansprüche 1 bis 5, **dadurch gekennzeichnet, daß** sie Mittel umfaßt, die dazu ausgestaltet sind, eine mittlere Spannung Null auf die Meßsonde (100) anzuwenden.

7. Vorrichtung nach Anspruch 1 in Verbindung mit Anspruch 6, **dadurch gekennzeichnet, daß** an den Operationsverstärker (510) auf einem zweiten Eingang, der entgegengesetzt zu demjenigen ist, der sequentiell mit der Meßsonde (100) verbunden wird, eine Spannung (+E) angelegt wird, die umgekehrte Vorzeichen zur Spannung (-E) hat, die durch die Versorgungsmittel auf die Meßsonde angewendet wird.

8. Vorrichtung nach Anspruch 7, **dadurch gekennzeichnet, daß** der Absolutwert der Spannung (+E2), die auf den zweiten Eingang des Operationsverstärkers (510) angewendet wird, gleich p mal der Amplitude der Versorgungsspannung (-E1) ist, die der Meßsonde (100) durch die Versorgungsmittel (300) zugeführt wird.

9. Vorrichtung nach einem der Ansprüche 1 bis 8, **dadurch gekennzeichnet, daß** die Steuerungsmittel (400) dazu ausgestaltet sind, ein Taktverhältnis von 50% festzulegen, das heißt zwei aufeinanderfolgende Sequenzen (T1, T2) derselben Dauer.

10. Vorrichtung nach einem der Ansprüche 1 bis 9, **dadurch gekennzeichnet, daß** die Steuerungsmittel (400) dazu ausgestaltet sind, Spannungsstufen auf die Meßsonde (100) anzuwenden.

11. Vorrichtung nach einem der Ansprüche 1 bis 10, **dadurch gekennzeichnet, daß** die Steuerungsmittel Takte der Sequenzen (T1 und T2) mit einer Frequenz zwischen 5 und 50 kHz festlegen.

12. Vorrichtung nach einem der Ansprüche 1 bis 5 und 7, **dadurch gekennzeichnet, daß** der in Gegenkopplung zum Operationsverstärker (510) geschaltete Kondensator (520) eine Kapazität hat, die wenigstens das 1000-fache derjenigen des umschaltbaren Kondensators (530) beträgt.

13. Vorrichtung nach einem der Ansprüche 1 bis 12, **dadurch gekennzeichnet, daß** die Integratorstufe mit dem Eingang einer Verarbeitungsstufe (600) verbunden ist, die ein Mittel zur Nullpunkteinstellung (610, 612, 614) umfaßt.

14. Vorrichtung nach einem der Ansprüche 1 bis 13, **dadurch gekennzeichnet, daß** die Integratorstufe (500) mit einer Verarbeitungsstufe (600) verbunden ist, die ein Mittel (606) zur Bereichseinstellung umfaßt.

15. Vorrichtung nach einem der Ansprüche 1 bis 14, **dadurch gekennzeichnet, daß** sie außerdem wenigstens eine zusätzliche Meßsonde (150) umfaßt, die zur Bestimmung der Permittivität der Umgebung der Meß- und Bezugssonde (100, 200) und zum Korrigieren der Verarbeitung des Signals verwendet wird.

16. Vorrichtung nach Anspruch 15, **dadurch gekennzeichnet, daß** die zusätzliche Meßsonde (150) in der Nähe des Bodens eines Tanks angeordnet ist.

**17.** Vorrichtung nach einem der Ansprüche 1 bis 16, **dadurch gekennzeichnet, daß** sie außerdem einen Temperaturfühler umfaßt, der dazu geeignet ist, die Temperatur der Umgebung der Meßsonde (100) und der Bezugssonde (200) zu messen.

**18.** Vorrichtung nach einem der Ansprüche 15 bis 17, **dadurch gekennzeichnet, daß** die Korrekturmittel (150, 480) dazu ausgestaltet sind, den Verstärkungsfaktor einer Regelungsstufe (660) zu verändern.

**19.** Vorrichtung nach einem der Ansprüche 1 bis 17, **dadurch gekennzeichnet, daß** die Korrekturmittel (150, 480) dazu ausgestaltet sind, an der durch die Versorgungsmittel (300) auf die Meßsonde (100) angewendeten Spannung eine Kompensation vorzunehmen.

**20.** Vorrichtung nach einem der Ansprüche 1 bis 17 und 19, **dadurch gekennzeichnet, daß** die Korrekturmittel (150, 480) dazu ausgestaltet sind, eine Korrekturspannung zu erzeugen, die an den Eingang der Integratorstufe (500) gelegt wird.

**21.** Vorrichtung nach einem der Ansprüche 1 bis 20, **dadurch gekennzeichnet, daß** sie Mittel zur Kompensation der anfänglichen Offsetspannung der Integratorstufe (500) umfaßt.

**22.** Vorrichtung nach Anspruch 21, **dadurch gekennzeichnet, daß** die Mittel zur Kompensation der Offsetspannung einen dem Kapazitäts-Umschaltsystem nachgeschalteten Verstärker (600) umfassen, der dazu ausgestaltet ist, eine Gegenspannung mit zum angewendeten Feld entgegengesetztem Vorzeichen auf den Summationspunkt der Integratorstufe (500) anzuwenden.

**23.** Vorrichtung nach Anspruch 21, **dadurch gekennzeichnet, daß** die Mittel zur Offsetkompensation Mittel umfassen, die dazu geeignet sind, während des Zählens der Ladungen auf den Summationspunkt des Kapazitäts-Umschaltverstärkers (600) in synchroner Weise eine Gegenspannung mit zum angewendeten Feld entgegengesetztem Vorzeichen anzuwenden.

**24.** Vorrichtung nach einem der Ansprüche 1 bis 23, **dadurch gekennzeichnet, daß** sie außerdem Mittel umfaßt, die dazu geeignet sind, ein Signal zu erzeugen, das das Spektrum des die Meßsonde (100) umgebenden Mediums repräsentiert.

**25.** Vorrichtung nach Anspruch 24, **dadurch gekennzeichnet, daß** die Mittel zur Analyse der Spektren Mittel zur Berechnung der Fouriertransformation und Mittel zum Vergleichen der erhaltenen Spektren mit digitalen Spektren, die in einer Datenbasis gespeichert sind, umfassen.

**26.** Vorrichtung nach einem der Ansprüche 24 oder 25, **dadurch gekennzeichnet, daß** die Mittel zur Analyse der Spektren eine Signaltransformationsstufe (710), einen Hochpaßfilter (712) mit hohem Verstärkungsfaktor, einen synchronen Detektor (714), einen Integrierer (716) und eine Berechnungsstufe (720) umfassen.

**27.** Vorrichtung nach einem der Ansprüche 1 bis 26, **dadurch gekennzeichnet, daß** sie zwei elektrisch leitende Körper (100, 200) umfaßt, die eine Meßsonde beziehungsweise eine Bezugssonde bilden und die in einem Abstand zwischen 1 und 10 cm und vorzugsweise in der Größenordnung von 5 cm angeordnet sind.

**28.** Vorrichtung nach einem der Ansprüche 1 bis 27, **dadurch gekennzeichnet, daß** von der Meßsonde (100) und der Bezugssonde (200) wenigstens eine mit einer Umhüllung versehen ist, die elektrisch isolierend und für das die Sonde umgebende Medium undurchlässig ist.

**29.** Vorrichtung nach einem der Ansprüche 1 bis 28, **dadurch gekennzeichnet, daß** wenigstens bestimmte Abschnitte der Verbindungsmittel (20, 22) zum Anschließen der Meßsonde (100) durch eine Umhüllung aus einem elektrisch leitenden Material, das auf demselben Potential wie die Bezugssonde (200) liegt, ausgeglichen werden.

**30.** Vorrichtung nach einem der Ansprüche 1 bis 29, **dadurch gekennzeichnet, daß** sie dazu ausgestaltet ist, eine Funktion auszuführen, die aus der Gruppe ausgewählt ist, die eine Füllstandmessung, eine Unterscheidung zwischen Substanzen oder die Detektion einer Anwesenheit oder eines Eindringens umfaßt.

**31.** Vorrichtung nach einem der Ansprüche 1 bis 30, **dadurch gekennzeichnet, daß** sie mehrere Meßsonden (100) umfaßt, die mit dazugehörigen Integratorstufen (500) verbunden sind.

**32.** Vorrichtung nach einem der Ansprüche 1 bis 30, **dadurch gekennzeichnet, daß** sie mehrere Meßsonden (100) umfaßt, die mittels eines Multiplexers mit einer gemeinsamen Integratorstufen (500) verbunden sind.

**33.** Vorrichtung nach einem der Ansprüche 1 bis 32, **dadurch gekennzeichnet, daß** sie eine Vorrichtung zur Füllstandmessung bildet.

**34.** Vorrichtung nach Anspruch 33, **dadurch gekennzeichnet, daß** die Meßsonde (100) in einer im wesentlichen senkrechten Ausrichtung in einem Tank (10) angeordnet ist und dadurch, daß die Integratorstufe (500) mit Verarbeitungsmitteln (600) verbunden ist, die dazu ausgestaltet sind, ein Signal zu erzeugen, das den Flüssigkeitsstand im Tank (10) repräsentiert.

**35.** Vorrichtung nach Anspruch 33, **dadurch gekennzeichnet, daß** die Meßsonde (100) durch einen elektrisch leitenden Bereich gebildet wird, der in einem Tank (10) in einer Höhe angeordnet ist, die einem zu überprüfenden Füllstand entspricht.

**36.** Vorrichtung nach einem der Ansprüche 33 und 35, **dadurch gekennzeichnet, daß** sie mehrere Meßsonden (100) umfaßt, die an jeweils dazugehörigen zu unterscheidenden Füllständen in einem Tank (10) angeordnet sind.

**37.** Vorrichtung nach einem der Ansprüche 33 bis 36, **dadurch gekennzeichnet, daß** die zu erfassende Flüssigkeit ein elektrischer Leiter ist und daß von der Meßsonde (100) oder der Bezugssonde (200) wenigstens eine mit einer elektrisch isolierenden Umhüllung ausgestattet ist.

**38.** Vorrichtung nach einem der Ansprüche 1 bis 37, **dadurch gekennzeichnet, daß** die Bezugssonde (200) durch den Tank gebildet wird.

**39.** Vorrichtung nach einem der Ansprüche 1 bis 37, **dadurch gekennzeichnet, daß** die Bezugssonde (200) durch ein durchbohrtes Element gebildet wird, das die Meßsonde (100) umgibt.

**40.** Vorrichtung nach einem der Ansprüche 1 bis 33, **dadurch gekennzeichnet, daß** sie eine Vorrichtung zur Unterscheidung von Substanzen bildet, die in einer Leitung (30) fließen, die mit einer Meßsonde (100) und einer Bezugssonde (200) ausgestattet ist.

**41.** Vorrichtung nach einem der Ansprüche 1 bis 33, **dadurch gekennzeichnet, daß** sie eine Meßsonde (100) und eine Bezugssonde (200) umfaßt, die sich entlang eines Überwachungsbereichs erstrecken, um eine Vorrichtung zur Eindringdetektion zu bilden.

**42.** Vorrichtung nach einem der Ansprüche 1 bis 33, **dadurch gekennzeichnet, daß** sie mehrere Paare von Meßelektroden (100) und Bezugselektroden (200) umfaßt, die über einen Sitz verteilt sind, um die Anwesenheit und/oder die Position eines Benutzers zu detektieren.

**43.** Vorrichtung nach einem der Ansprüche 1 bis 33, **dadurch gekennzeichnet, daß** sie eine Meßsonde (100) und eine Bezugssonde (200) umfaßt, die entlang einer Wand eines Portals (60) verlaufen, um einen Durchgangsdetektor zu bilden.

**44.** Vorrichtung nach einem der Ansprüche 1 bis 33, **dadurch gekennzeichnet, daß** sie eine Meßsonde (100) und eine Bezugssonde (200) umfaßt, die an der Seite eines Transportbands angeordnet sind, um den Durchgang von Gegenständen zu detektieren.

**45.** Vorrichtung nach einem der Ansprüche 1 bis 33, **dadurch gekennzeichnet, daß** sie mehrere Paare von Meßsonden (100) und Bezugssonden (200) umfaßt, um eine Tastatur mit berührungssensitiven Tasten zu realisieren.

**46.** Vorrichtung nach einem der Ansprüche 1 bis 33, **dadurch gekennzeichnet, daß** von der Meßsonde (100) oder der Bezugssonde (200) eine auf einem verformbaren Element (88) angebracht wird, um einen Drucksensor zu bilden.

**47.** Vorrichtung nach einem der Ansprüche 1 bis 33, **dadurch gekennzeichnet, daß** die Meßsonde (100) und die Bezugssonde (200) auf zwei Bereichen eines Reifens angebracht sind, die sich in Abhängigkeit von dessen Luftdruck zueinander verschieben, um einen Reifenluftdrucksensor zu bilden.

**Claims**

1. Measuring device employing indirect measurement of permittivity and including two electrically conductive bodies respectively constituting a measuring probe (100) and a reference probe (200), electrical power supply means (300) adapted to deliver a DC electrical voltage of controlled amplitude, an integrator stage (500) including a capacitor switching system (530) and control means (400) adapted to define a cyclic series of two sequences at a controlled frequency, namely a first sequence (T1) during which the electrical power supply means (300) are connected to the measuring probe (100) to apply an electric field between the measuring probe (100) and the reference probe (200) and accumulate electrical charge on the measuring probe (100) and a second sequence (T2) during which the electrical power supply means (300) are disconnected from the measuring probe (100) which is connected to a summation point of the integrator stage (500) to transfer its charge into the integrator stage (500) and obtain at the output thereof a signal representative of the permittivity between the measuring probe (100) and the reference probe (200), the integrator stage (500) including an operational amplifier (510) and an integrator capacitor (520) constituting a feedback capacitor of said amplifier (510), **characterized in that** the integration stage (500) includes a second capacitor (530) switched between the output and the input of the operational amplifier (510) at the timing rate of the sequences (T1, T2) controlled by the control means (400), so that under steady state conditions there is obtained at the output of the operational amplifier (510) an "equilibrium" voltage $V_s$ equal to $-E.C_s/C530$ where $-E$ is the amplitude of the voltage at the terminals of the electrical power supply means (300) and $C_s$ and C530 are respectively the capacitance between the measuring probe, (100) and the reference probe, on the one hand, and the switched second capacitor (530), on the other hand.

2. Device according to Claim 1 **characterized in that** the switched capacitor (530) has a capacitance of the same order of magnitude as the capacitance between the measuring probe (100) and the reference probe (200).

3. Device according to either Claim 1 or Claim 2 **characterized in that** the integrator capacitor (520) is connected between the inverting input and the output of the operational amplifier (510).

4. Device according to any of Claims 1 to 3 **characterized in that** the switched capacitor (530) is connected to the output of the operational amplifier (510) during the sequences (T1) of supply of power to the measuring probe (100) and to the input of the operational amplifier (510) during the sequences (T2) of connection of the measuring probe (100) to the input of that amplifier (510).

5. Device according to any of Claims 1 to 4 **characterized in that** the switched capacitor (530) is switched simultaneously with the measuring probe (100).

6. Device according to any of Claims 1 to 5 **characterized in that** it includes means for applying a null average voltage to the measuring probe (100).

7. Device according to Claim 1 in conjunction with Claim 6 **characterized in that** the operational amplifier (510) receives on a second input opposite that adapted to be connected sequentially to the measuring probe (100) a voltage (+E) of opposite sign to the voltage (-E) applied by the power supply means to the measuring probe.

8. Device according to Claim 7 **characterized in that** the absolute value of voltage (+E2) applied to the second input of the operational amplifier (510) is equal to p times the amplitude of the supply voltage (-E1) delivered by the power supply means (300) to the measuring probe (100).

9. Device according to any of Claims 1 to 8 **characterized in that** the control means (400) are adapted to define a duty factor of 50%, i.e. two successive sequences (T1, T2) of the same duration.

10. Device according to any of Claims 1 to 9 **characterized in that** the control means (400) are adapted to apply a stepped voltage to the measuring probe (100).

11. Device according to any of Claims 1 to 10 **characterized in that** the control means define sequence cycles (T1 and T2) at a frequency from 5 to 50 kHz.

12. Device according to any of Claims 1 to 5 and 7 **characterized in that** the capacitor (520) constituting a feedback capacitor of the operational amplifier (510) has a capacitance at least 1 000 times that of the switching capacitor (530).

13. Device according to any of Claims 1 to 12 **characterized in that** the integrator stage is connected to the input of a processing stage (600) including zero adjustment means (610, 612, 614).

14. Device according to any of Claims 1 to 13 **characterized in that** the integrator stage (500) is connected to a processing stage (600) including full scale deflection adjustment means (606).

15. Device according to any of Claims 1 to 14 **characterized in that** it further includes at least one auxiliary measuring probe (150) used to determine the permittivity of the environment of the measuring and reference probes (100, 200) and to apply a correction to the processing of the signal.

16. Device according to Claim 15 **characterized in that** the auxiliary measuring probe (150) is near the bottom of a tank.

17. Device according to any of Claims 1 to 16 **characterized in that** it further includes a temperature probe adapted to measure the temperature of the environment of the measuring probe (100) and the reference probe (200).

18. Device according to any of Claims 15 to 17 **characterized in that** the correction means (150, 480) are adapted to modify the gain of a control stage (660).

19. Device according to any of Claims 1 to 17 **characterized in that** the correction means (150, 480) are adapted to apply compensation to the voltage applied by the power supply means (300) to the measuring probe (100).

20. Device according to any of Claims 1 to 17 and 19 **characterized in that** the correction means (150, 480) are adapted to generate a correction voltage applied to the input of the integrator stage (500).

21. Device according to any of Claims 1 to 20 **characterized in that** it includes means for compensating an initial offset voltage of the integrator stage (500).

22. Device according to Claim 21 **characterized in that** the offset voltage compensating means include an amplifier downstream of the capacitor switching system (600) adapted to apply a voltage of opposite sign to the field applied to the summation point of the integrator stage (500).

23. Device according to Claim 21 **characterized in that** the offset compensating means include means adapted to apply a voltage of opposite sign to the applied field synchronously to the summation point of the capacitor switching amplifier (600) during counting of charges.

24. Device according to any of Claims 1 to 23 **characterized in that** it further includes means for generating a signal representative of the spectrum of the medium surrounding the measuring probe (100).

25. Device according to Claim 24 **characterized in that** the spectrum analyser means include Fourier transform calculating means and means for comparing the spectra obtained with digital spectra stored in a database.

26. Device according to either Claim 24 or Claim 25 **characterized in that** the spectrum analyser means include a shaping stage (710), a high-gain high-pass stage (712), a synchronous detector (714), an integrator (716) and a calculation stage (720).

27. Device according to any of Claims 1 to 26 **characterized in that** it includes two electrically conductive bodies (100, 200) respectively forming a measuring probe and a reference probe at distances from 1 to 10 cm, preferably of the order of 5 cm.

28. Device according to any of Claims 1 to 27 **characterized in that** the measuring probe (100) and/or the reference probe (200) has an electrically insulative coating sealed against the medium surrounding the probe.

29. Device according to any of Claims 1 to 28 **characterized in that** at least some sections of the connecting means (20, 22) connecting the measuring probe (100) are neutralized by an electrically conductive material sheath at the same potential as the reference probe (200).

30. Device according to any of Claims 1 to 29 **characterized in that** it is adapted to implement a function chosen from the group comprising measuring a level, discriminating products or detecting presence or intrusion.

31. Device according to any of Claims 1 to 30 **characterized in that** it includes a plurality of measuring probes (100) connected to respective integrator stages (500).

32. Device according to any of Claims 1 to 30 **characterized in that** it includes a plurality of measuring probes (100) connected to a common integrator stage (500) via a multiplexer.

33. Device according to any of Claims 1 to 32 **characterized in that** it constitutes a level measuring device.

34. Device according to Claim 33 **characterized in that** the measuring probe (100) is generally vertical in a tank (10) and the integrator stage (500) is connected to processing means (600) adapted to generate a signal representative of the level of fluid in the tank (10).

35. Device according to Claim 33 **characterized in that** the measuring probe (100) is formed by an electrically conductive area in a tank (10) at a height corresponding to a scanning level.

36. Device according to either Claim 33 or Claim 35 **characterized in that** it includes a plurality of measuring probes (100) at respective discrimination levels in a tank (10).

37. Device according to any of Claims 33 to 36 **characterized in that** the fluid to be detected is electrically conductive and the measuring probe (100) and/or the reference probe (200) has an electrically insulative coating.

38. Device according to any of Claims 1 to 37 **characterized in that** the reference probe (200) is formed by the tank.

39. Device according to any of Claims 1 to 37 **characterized in that** the reference probe (200) is an apertured member around the measuring probe (100).

40. Device according to any of Claims 1 to 33 **characterized in that** it constitutes a device for discriminating a product flowing in a pipe (30) equipped with a measuring probe (100) and a reference probe (200).

41. Device according to any of Claims 1 to 33 **characterized in that** it includes a measuring probe (100) and a reference probe (200) which run along an area under surveillance to form an intruder detector device.

42. Device according to any of Claims 1 to 33 **characterized in that** it includes a plurality of pairs of measuring electrodes (100) and reference electrodes (200) arranged on a seat to detect the presence and/or the position of a user.

43. Device according to any of Claims 1 to 33 **characterized in that** it includes a measuring sensor (100) and a reference sensor (200) running along a wall of a doorway (60) to form a passage detector.

44. Device according to any of Claims 1 to 33 **characterized in that** it includes a measuring probe (100) and a reference probe (200) placed at the side of a conveyor belt to detect the passage of objects.

45. Device according to any of Claims 1 to 33 **characterized in that** it includes a plurality of pairs of measuring probes (100) and reference probes (200) forming a tactile keypad.

46. Device according to any of Claims 1 to 33 **characterized in that** the measuring probe (100) or the reference probe (200) is placed on a deformable member (88) to form a pressure sensor.

47. Device according to any of Claims 1 to 33 **characterized in that** the measuring probe (100) and the reference probe (200) are placed on two areas of a tyre which can move relative to each other as a function of the inflation of said tyre to form a tyre inflation sensor.

FIG.1

FIG_2

# FIG.3

FIG_4

FIG.5

FIG.6

FIG.7

FIG_8

FIG_9

FIG_10

EP 1 123 489 B1

## FIG.11

## FIG.12

## FIG.13

## FIG.14

## FIG.15

100

200

40

300,
400,
500,
600

730

## FIG.16

100    200

100

100

100

100

50

200

200

200

200

FIG.17

300, 400,
500, 600

200

100

60

FIG.18

100

70

200

## FIG. 19

## FIG. 20

## FIG. 21